# EUROPEAN PATENT SPECIFICATION

(11) **EP 4 263 731 B1**
(45) Date of publication and mention of the grant of the patent: **18.09.2024**
(21) Application number: 21806255.2
(22) Date of filing: 09.11.2021
(51) Int. Cl.: C09D 11/101, C09D 11/30

(54) **UV CURABLE INKJET INKS AND INKJET PRINTING METHODS**
UV-HÄRTBARE TINTENSTRAHLTINTEN UND TINTENSTRAHLDRUCKVERFAHREN
ENCRES DURCISSABLES PAR UV POUR JET D'ENCRE ET PROCÉDÉS D'IMPRESSION À JET D'ENCRE

(30) Priority: 16.12.2020 EP 20214597
(43) Date of publication of application: 25.10.2023
(73) Proprietor: AGFA NV, 2640 Mortsel (BE)
(72) Inventor: RETAILLEAU, Matthieu, 2640 Mortsel (BE); VANKEERBERGHEN, An, 2640 Mortsel (BE); THIELEMANS, Niels, 2640 Mortsel (BE)
(74) Representative: Strijckers, Hans Louis P.
(86) International application number: PCT/EP2021/081049
(87) International publication number: WO 2022/128258

(56) References cited:
- EP-A1- 3 608 373
- WO-A1-2019/077364
- GB-A- 2 562 169

## Description

### Technical Field

The present invention relates to UV curable inkjet inks and inkjet printing methods therewith, capable of producing cured images exhibiting good flexing properties and adhesion, especially on tarpaulins.

### Background Art

A tarpaulin is a large piece of strong, flexible, water-resistant or waterproof material. Tarpaulins are used in many ways to protect persons and things from wind, rain, and sunlight. They are used to protect the loads of open trucks and wagons, to keep wood piles dry, and for shelters such as tents or other temporary structures.

UV curable inkjet inks are very suitable for printing high quality images on non-absorbing ink-receivers. Decreasing the ratio of polyfunctional monomers over monofunctional monomers in UV curable inkjet inks leads to less cross-linked polymers, which is known to be advantageous for higher flexibility.

For example, EP 1967556 A (TOYO INK) discloses an active energy beam-curable inkjet ink containing from 90 to 99.99% by weight of a monofunctional monomer, and from 0.01 to 10% by weight of a polyfunctional monomer.

US 2007211111 (FUJIFILM) discloses an ink composition including an N-vinyl lactam, a radically polymerizable compound, and a polymerization initiator, the content of the N-vinyl lactam being at least 10 wt% of the ink total weight, and the content ratio by weight of N-vinyl lactam to the radically polymerizable compound being 1:8.5 to 1. The ink leads to cured images having excellent flexibility and adhesion to certain substrates.

Flexing differs from flexibility in that the bending of a substrate to which the ink image adheres occurs frequently. For example, an ink image printed on a truck curtain (tarpaulin) is frequently bent upon loading and unloading the truck.

Flexing is especially critical for a white inkjet ink. If a coloured tarpaulin is used, then a white ink is applied as background for colour inks in order to obtain a vibrant colour image. For masking the colour of the background, the lay down of white ink is usually much higher than that of colour ink, especially when the background is a dark colour such as black.

EP 3608373 A (AGFA) discloses a UV curable white inkjet ink exhibiting excellent flexing and image quality on leather and tarpaulins.

Despite the suggested ink compositions, there still remains a need for UV curable inkjet inks exhibiting good flexing properties and improved adhesion on tarpaulins.

### Summary of invention

In order to overcome the problems described above, preferred embodiments of the present invention provide UV curable inkjet inks including specific polymerizable compounds in specific amounts.

It was found that a UV curable inkjet ink exhibiting good flexing and adhesion to tarpaulins could be obtained by using a specific combination of four different types of cyclic polymerizable compounds: N-vinyl oxazolidinone, a heterocyclic acrylate being a non-aromatic cyclic acrylate wherein all heteroatoms are oxygen, an aromatic acrylate and an alicyclic acrylate in specific amounts and according to a specific ratio.

Further advantages and preferred embodiments of the present invention will become apparent from the following description.

### Description of embodiments

### Definitions

The term "monofunctional", as used in monofunctional polymerizable compounds means polymerizable compounds containing a single polymerizable group.

The term "polyfunctional", as used in polyfunctional polymerizable compounds means polymerizable compounds containing two, three or more polymerizable groups.

The term "polymerizable compounds" includes monomers and oligomers.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms.

Unless otherwise specified a substituted or unsubstituted alkyl group is preferably a C₁ to C₆-alkyl group.

A cyclic group includes at least one ring structure and may be a monocyclic group or polycyclic group, the latter meaning one or more rings fused together.

An alicyclic group is a non-aromatic homocyclic group wherein the ring atoms consist of carbon atoms.

Unless otherwise specified an aryl group is preferably a phenyl group or naphthyl group.

Unless otherwise specified an acyl group is preferably a -C(=O)-R group wherein R is selected from the group consisting of an optionally substituted alkyl group, an optionally substituted aryl group and an optionally substituted heteroaryl group.

### UV Curable Inkjet Inks

In a preferred embodiment of the present invention, the UV curable inkjet ink for inkjet printing tarpaulins includes a pigment, a free radical photoinitiator and a polymerizable composition containing more than 90.0 wt% of monofunctional polymerizable compounds based on the total weight of the polymerizable composition, wherein the monofunctional polymerizable compounds include more than 5.0 wt% of vinyl methyl oxazolidinone (V); more than 12.0 wt% of a heterocyclic acrylate (H) which is a non-aromatic cyclic acrylate wherein the one or more heteroatoms are an oxygen atom; and more than 23.0 wt% of a mixture of an aromatic acrylate (A) and an alicyclic acrylate (L); wherein the wt% of the monofunctional polymerizable compounds is based on the total weight of the UV curable inkjet ink; and wherein a weight ratio R = (H + A) / (V+ L) is no more than 2.0.

In a particularly preferred embodiment, the UV curable inkjet ink contains more than 7.0 wt% of vinyl methyl oxazolidinone (V).

In a particularly preferred embodiment, the UV curable inkjet ink contains more than 13.0 wt% of a heterocyclic acrylate (H) being a non-aromatic cyclic acrylate with all heteroatoms being oxygen.

In a particularly preferred embodiment, the UV curable inkjet ink contains more than 28.0 wt% of a mixture of an aromatic acrylate (A) and an alicyclic acrylate (L).

In a particularly preferred embodiment, the UV curable inkjet ink contains more than 50.0 wt%, preferably more than 62.0 wt% of N-vinyl methyl oxazolidinone (V); heterocyclic acrylate (H) being a non-aromatic cyclic acrylate wherein the one or more heteroatoms are an oxygen atom; aromatic acrylate (A) and alicyclic acrylate (L) based on the total weight of the inkjet ink. By using such an amount the adhesion is maximized.

In a particularly preferred embodiment of the UV curable inkjet ink, the polymerizable composition contains at least 92.0 wt% of monofunctional polymerizable compounds. By using such an amount the flexing is maximized.

Each of the above preferred embodiments may be combined with each other.

The UV curable inkjet ink may include other ingredients as required, such as a compound selected from the group consisting of dispersants, dispersion synergists, surfactants and polymerization inhibitors.

For having a good ejecting ability, the viscosity of the UV curable inkjet ink at the jetting temperature is preferably smaller than 30.0 mPa.s, more preferably smaller than 20.0 mPa.s, most preferably between 3.0 and 15.0 mPa.s at a shear rate of 1000 s⁻¹ and at a jetting temperature between 30 and 70°C, preferably at a temperature of 45°C.

The surface tension of the UV curable inkjet ink is preferably in the range of 20 mN/m to 35 mN/m at 25°C, more preferably in the range of about 22 mN/m to about 30 mN/m at 25°C. In these ranges, good ink spreading is obtained on the tarpaulin.

A single UV curable inkjet ink can be used, but preferably a UV curable inkjet ink set containing a plurality of UV curable inkjet inks in accordance with the invention is used.

For printing multi-colour images, the UV curable inkjet ink is part of a UV curable inkjet ink set. A preferred UV curable inkjet ink set for printing different colours contains at least three but most preferably at least four UV curable inkjet inks in accordance with the invention. The inkjet ink set is preferably a UV curable CMYK inkjet ink set, preferably further including a UV curable white inkjet ink. A UV curable white inkjet ink enhances colour vibrancy when the white ink is located between the tarpaulin and the coloured inks. This inkjet ink set may also be extended with extra inks such as violet, green, red, blue, and/or orange to further enlarge the colour gamut of the image. The UV curable inkjet ink set may also be extended by the combination of full density inkjet inks with light density inkjet inks. The combination of dark and light colour inks and/or black and grey inks improves the image quality by a lowered graininess.

The UV curable inkjet ink set may also include a colourless UV curable inkjet ink. Colourless UV curable inkjet inks may be used as a varnish to improve the glossiness of an image or to serve as a protective layer for scratch resistance.

### N-Vinyl Oxazolidinone (V);

The N-vinyl oxazolidinone is preferably a compound according to the Formula V-1: 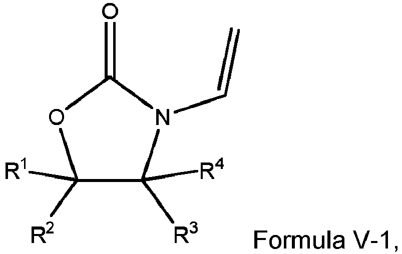 wherein R¹ to R⁴ are not limited other than by the constraints imposed by the use in an ink-jet ink, such as viscosity, stability, toxicity etc.

Preferred substituents for R¹ to R⁴ include hydrogen, alkyl, cycloalkyl, aryl and combinations thereof, any of which may be interrupted by heteroatoms.

Most preferably R¹ to R⁴ are independently selected from hydrogen or a C₁ to C₁₀ alkyl.

Preferred compounds are disclosed in WO 2015/022228 (BASF) and US 4831153 (DOW CHEMICAL)

In a particularly preferred embodiment of the UV curable inkjet ink, the N-vinyl oxazolidinone is N-vinyl-5-methyl-2-oxazolidinone. It is available from BASF and has a structure according to Formula V-2: 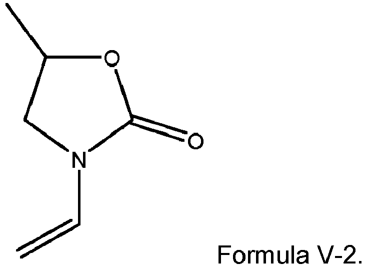 Including N-vinyl-5-methyl-2-oxazolidinone improves the curability and adhesion to the tarpaulin.

The amount of N-vinyl oxazolidinone is more than 5.0 wt%, preferably 6.0 to 30.0 wt%, more preferably 7.0 to 20.0 wt% based on the total weight of the inkjet ink.

### Heterocyclic Acrylate (H)

The heterocyclic acrylate (H) contains a non-aromatic ring structure wherein the one or more heteroatoms are an oxygen atom.

Preferred heterocyclic acrylates include tetrahydrofurfuryl acrylate, caprolacton-modified-tetrahydrofurfurylacrylate, cyclic trimethylolpropane formal acrylate, (2-ethyl-2-methyl-1,3-dioxolan-4-yl)methyl acrylate, (2.2-dimethyl-1,3-dioxolan-4-yl)methyl acrylate cyclohexanespriro-2-(1,3-dioxolane-4-yl))methyl acrylate and (3-ethyloxetane-3-yl)methyl acrylate.

In a preferred embodiment of the UV curable inkjet ink, the heterocyclic acrylate includes a polymerizable compound selected from the group consisting of tetrahydrofurfuryl acrylate, cyclic trimethylolpropane formal acrylate, (3-ethyloxetane-3-yl)methyl acrylate and (2.2-dimethyl-1.3-dioxolan-4-yl)methyl acrylate.

In a more preferred embodiment of the UV curable inkjet ink, the heterocyclic acrylate includes a polymerizable compound selected from the group consisting of cyclic trimethylolpropane formal acrylate, (3-ethyloxetane-3-yl)methyl acrylate and (2.2-dimethyl-1.3-dioxolan-4-yl)methyl acrylate.

In a particularly preferred embodiment, the UV curable inkjet ink contains more than 12.0 wt%, preferably 12.5 wt% to 40.0 wt%, more preferably 13.0 to 35.0 wt% of a heterocyclic acrylate (H) being a non-aromatic cyclic acrylate wherein the one or more heteroatoms are an oxygen atom.

### Aromatic Acrylates (A)

The aromatic acrylates may include a heteroaromatic acrylate, but preferably a polymerizable compound containing no heteroatoms in its ring structure is used.

Preferred aromatic acrylates include benzyl acrylate, 2-phenoxyethyl acrylate, 2-hydroxy-3-phenoxypropylacrylate, phenoxypolyethyleneglycol acrylate, ethoxylated(4) nonylphenol acrylate and ethoxylated(4)phenol acrylate.

In a preferred embodiment of the UV curable inkjet ink, the aromatic acrylate includes a polymerizable compound selected from the group consisting of 2-phenoxyethyl acrylate and 2-hydroxy-3-phenoxypropylacrylate.

The amount of aromatic acrylates is preferably more than 6.0 wt%, preferably 7.0 to 25.0 wt% more preferably 8.0 to 20.0 wt% based on the total weight of the inkjet ink.

### Alicyclic Acrylates (L)

The alicyclic acrylate contains one or more all-carbon rings which may be either saturated or unsaturated, but do not have aromatic character.

Preferred alicyclic acrylates include 3,3,5-trimethylcyclohexyl acrylate, isobornyl acrylate, 4-tert.butylcyclohexylacrylate, dicyclopentenylacrylate; and dicyclopentenyl-oxyethylacrylate cyclohexyl acrylate, 1,4-cyclohexanedimethanolmonoacrylate and 2-propenoic acid, (octahydro-4,7-methano-1H-inden-1-yl)methyl ester.

In a preferred embodiment of the UV curable inkjet ink, the alicyclic acrylate includes a polymerizable compounds selected from the group consisting of 3,3,5-trimethylcyclohexyl acrylate, isobornyl acrylate, (octahydro-4,7-methano-1H-indenyl)methyl acrylate and 4-tert.butylcyclohexylacrylate.

In a preferred embodiment of the UV curable inkjet ink, the alicyclic acrylate includes a polymerizable compounds selected from the group consisting of 3.3.5-trimethylcyclohexyl acrylate and 4-tert.butylcyclohexyl acrylate.

The amount of alicyclic acrylates is preferably more than 6.0 wt%, preferably 7.0 to 35.0 wt% more preferably 8.0 to 25.0 wt% based on the total weight of the inkjet ink.

### Polyfunctional Polymerizable Compounds

Any polyfunctional monomer and/or oligomer capable of free radical polymerization may be used. The polyfunctional polymerizable compounds may be any polyfunctional monomer and/or oligomer found in the Polymer Handbook Vol 1 + 2, 4th edition, edited by J. BRANDRUP et al., Wiley-Interscience, 1999.

The polymerizable composition may contain up to 10.0 wt%, preferably no more than 8.0 wt%, more preferably no more than 6.0 wt% and most preferably no more than 4.5 wt% of polyfunctional polymerizable compounds based on the total weight of the polymerizable composition. In these ranges, the polyfunctional polymerizable improves the scratch resistance without impairing the flexing properties.

The polyfunctional polymerizable compounds may include 2, 3, 4 or more ethylenically unsaturated polymerizable groups. However, for maximizing flexing properties, the UV curable inkjet ink preferably contains only polymerizable compounds including 2 or 3 ethylenically unsaturated polymerizable groups, more preferably only polymerizable compounds including 2 ethylenically unsaturated polymerizable groups.

Preferred polyfunctional polymerizable compounds are ethoxylated(30) bisphenol A diacrylate, polyethylene glycol (600) diacrylate, ethoxylated(20) trimethylolpropane triacrylate, ethoxylated(15) trimethylolpropane triacrylate, caprolacton-modified(6M)neopentylglycol hydroxypivalate diacrylate; polyethylene glycol (400) diacrylate, ethoxylated(9) trimethylolpropane triacrylate, propoxylated(3) trimethylolpropane triacrylate, propoxylated(5.5) glyceryl triacrylate, ethoxylated(6) trimethylolpropane triacrylate, hexanediol ethoxylated (3) diacrylate, ethoxylated(10) bisphenol A diacrylate, polyethylene glycol (200) diacrylate, caprolacton-modified(2M) neopentylglycol hydroxypivalate diacrylate; propoxylated(3) glyceryl triacrylate, ethoxylated(3) trimethylolpropane triacrylate, propoxylated(6) trimethylolpropane triacrylate; tetraethylene glycol diacrylate, propoxylated neopentyl glycol diacrylate, 1,6 hexanediol diacrylate, 1,4-butanediol diacrylate; ethoxylated (2), neopentylglycoldiacrylate, 3-methyl-1,5-pentanedioldiacrylate, 2-(2-vinyloxyethoxy)ethyl acrylate and ethoxylated(4) bisphenol A diacrylate and dipropylene glycol diacrylate.

### Other Monofunctional Polymerizable compounds

In addition to the N-vinyl oxazolidinones, non-aromatic heterocyclic acrylates wherein the one or more heteroatoms are an oxygen atom, aromatic acrylates and alicyclic acrylates, any monomer or oligomer capable of free radical polymerization may be used as other monofunctional polymerizable compound. These monofunctional polymerizable compounds may be any monomer and/or oligomer found in the Polymer Handbook Vol 1 + 2, 4th edition, edited by J. BRANDRUP et al., Wiley-Interscience, 1999. For curability, the monofunctional polymerizable compounds are preferably acrylates or N-vinyllactams.

The other monofunctional polymerizable compounds are preferably present in an amount of 0 to 40.0 wt%, more preferably no more than 30.0 wt% and most preferably no more than 20.0 wt% based on the total weight of the inkjet ink.

Preferred other monofunctional polymerizable compounds include diethyleneglycolbutyletheracrylate, 2-ethyl hexyl acrylate, ethoxydiethyleneglycolacrylate, di(ethylene glycol) 2-ethylhexyl ether acrylate, octyl-decylacrylate, n-octylacrylate, isodecyl acrylate, isononyl acrylate, methoxypolyethyleneglycol(350)monoacrylate, tridecyl acrylate, 2(2-ethoxyethoxy) ethyl acrylate, isooctyl acrylate, butylacrylate, and polycaprolactone acrylate, methoxy polyethylene glycol (550) monoacrylate, 2-methoxyethyl acrylate, ethoxylated (4) lauryl acrylate, iso-amylacrylate, methoxy-triethyleneglycolacrylate,ethoxylated(8) nonylphenolacrylate, 4-hydroxy butyl acrylate, lauryl acrylate, ethylacrylate, 1H,1H,5H-octafluoropentylacrylate, 2-hydroxypropyl acrylate, 2-propylheptylacrylate, isostearylacrylate, hydroxyethyl acrylate, 2,2,2-trifluoroethylacrylate, stearylacrylate, 2-hydroxybutylacrylate, 2-ethylhexyldiglycolacrylate, tertiarybutylacrylate, carboxyethyl acrylate, 2-((butylcarbamoyl)oxy)ethyl acrylate and 2-hydroxy 3-(prop-enoyloxy)propyl 2-methyl-2-propylhexanoate.

The other polymerizable compound may also be a polymerizable compound including a vinylamide group, preferably a cyclic compound represented by Formula (NV-1): 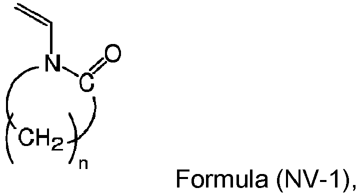 wherein n represents an integer of 2 to 6, n is preferably 3 or 5, and n is particularly preferably 5. Such compounds are also referred to as N-vinyllactams. The N-vinyllactam may have a substituent such as an alkyl group or an aryl group on the lactam ring.

Particularly preferred N-vinyllactams including a vinylamide are N-vinylcaprolactam and N-vinyl-2-pyrrolidone. Most preferably the polymerizable compounds including a vinylamide is N-vinylcaprolactam as it gives particularly good ink curability of a cured ink layer, especially when N-vinylcaprolactam is present in the UV curable inkjet ink in an amount of 5.0 to 20.0 wt%, preferably at least 10.0 wt% and most preferably at least 15 wt% based on the total weight of the UV curable inkjet ink.

The N-vinyllactam is preferably present in the UV curable inkjet ink in an amount of 0.0 to 16.0 wt%, more preferably no more than 13.0 wt% based on the total weight of the inkjet ink. In these ranges flexing is maximized.

### Colorants

A coloured UV curable inkjet ink contains a colorant. The colorants used in the inkjet inks preferably consist of one or more pigments. Organic and/or inorganic pigments are preferred for their superior light fading properties compared to dyes.

The pigments may be black, white, cyan, magenta, yellow, red, orange, violet, blue, green, brown, mixtures thereof, and the like. This colour pigment may be chosen from those disclosed by HERBST, Willy, et al. Industrial Organic Pigments, Production, Properties, Applications. 3rd edition. Wiley - VCH, 2004. ISBN 3527305769.

Preferred yellow pigments are C.I. Pigment Yellow 1, 3, 10, 12, 13, 14, 17, 55, 65, 73, 74, 75, 83, 93, 97, 109, 111, 120, 128, 138, 139, 150, 151, 154, 155, 175, 180, 181, 185, 194 and 213.

Preferred red or magenta pigments are C.I. Pigment Red 17, 22, 23, 41, 48:1, 48:2, 49:1, 49:2, 52:1, 57:1, 88, 112, 122, 144, 146, 149, 170, 175, 176, 184, 185, 188, 202, 206, 207, 210, 216, 221, 248, 251, 254, 255, 264, 266, 270 and 272.

Preferred violet pigments are C.I. Pigment Violet 19, 23, 32, and 37.

Preferred cyan or blue pigments are C.I. Pigment Blue 15:1, 15:2, 15:3, 15:4, 15:6, 16, 56, 61 and (bridged) aluminium phthalocyanine pigments.

Preferred orange pigments are C.I. Pigment Orange 5, 13, 16, 34, 40, 43, 59, 66, 67, 69, 71 and 73.

Preferred green pigments are C.I. Pigment Green 7 and 36.

With the above preferred colour pigments, a good colour gamut can be achieved with a UV curable inkjet ink set in accordance with the invention.

In a particularly preferred embodiment of the UV curable inkjet ink, the pigment is an organic colour pigment or a carbon black pigment. The organic colour pigment is preferably selected from the group consisting of C.I. Pigment Yellow 83, C.I. Pigment Yellow 97, C.I. Pigment Yellow 110, C.I. Pigment Yellow 120, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214, a beta-copper phthalocyanine pigment, a quinacridone pigment, a diketopyrrolopyrrole pigment and mixed crystals thereof. The latter organic colour pigments achieve superior light stability on tarpaulins. This increases the life-time of the tarpaulins which are often heavily exposed to sun light, like when the tarpaulin is used as a truck curtain.

A yellow UV curable inkjet ink preferably contains C.I. Pigment Yellow 155 as colour pigment.

Suitable pigments also include mixed crystals of the above particular preferred pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia^{™} Magenta RT-355-D from BASF AG.

Carbon black is preferred as a black pigment. Suitable black pigments include carbon blacks such as Pigment Black 7 (e.g. Carbon Black MA8^{®} from MITSUBISHI CHEMICAL), Regal^{®} 400R, Mogul^{®} L, Elftex^{®} 320 from CABOT Co., or Carbon Black FW18, Special Black 250, Special Black 350, Special Black 550, Printex^{®} 25, Printex^{®} 35, Printex^{®} 55, Printex^{®} 90, Printex^{®} 150T from EVONIK.

It is also possible to make mixtures of pigments. For example, a neutral black inkjet ink is preferred and can be obtained by mixing a black pigment and a cyan and/or magenta pigment into the ink. Also pigments may be combined to enlarge the colour gamut of an ink set. The inkjet ink set may also include one or more spot colours. Silver and gold are often desired colours for making a product more attractive by giving it an exclusive appearance.

Also inorganic pigments may be present in the inks. Suitable pigments are C.I. Pigment Metal 1, 2 and 3. Illustrative examples of the inorganic pigments include titanium oxide, barium sulfate, calcium carbonate, zinc oxide, lead sulfate, yellow lead, zinc yellow, red iron oxide (III), cadmium red, ultramarine blue, prussian blue, chromium oxide green, cobalt green, amber, titanium black and synthetic iron black.

Pigment particles in inkjet ink should be sufficiently small to permit free flow of the ink through the inkjet-printing device, especially at the ejecting nozzles. It is also desirable to use small particles for maximum colour strength and to slow down sedimentation.

The numeric average pigment particle size is preferably between 0.050 and 1 µm, more preferably between 0.070 and 0.300 µm and particularly preferably between 0.080 and 0.200 µm for enhancing colour gamut. Most preferably, the numeric average pigment particle size is no larger than 0.150 µm. An average particle size smaller than 0.050 µm is less desirable for decreased light-fastness, but mainly also because very small pigment particles or individual pigment molecules thereof may still be extracted in food packaging applications.

The numeric average pigment particle size of pigment particles is best determined with a Brookhaven Instruments Particle Sizer BI90plus based upon the principle of dynamic light scattering. The ink is then diluted, for example, with ethyl acetate to a pigment concentration of 0.002 wt%. The measurement settings of the BI90plus are: 5 runs at 23°C, angle of 90°, wavelength of 635 nm and graphics = correction function.

In a coloured inkjet ink the pigment is preferably present in an amount of 0.1 to 13.0 wt%. A dark colour inkjet ink preferably contains 1.5 to 13.0 wt%, more preferably 1.8 to 6.0 wt% of colour pigment based on the total weight of the inkjet ink, while a light colour inkjet ink preferably contains 0.1 to 1.3 wt%, more preferably 0.3 to 1.2 wt% of colour pigment based on the total weight of the inkjet ink.

In the case of a UV curable white inkjet ink, preferably a pigment with a refractive index greater than 1.60, preferably greater than 2.00, more preferably greater than 2.50 and most preferably greater than 2.60 is used. Preferably titanium dioxide is used for the pigment with a refractive index greater than 1.60.

Suitable white pigments are disclosed in Table 1.

**Table 1**

| **C.I. Number** | **Chemical name** | **CAS RN** |
|---|---|---|
| Pigment white 1 | Lead hydroxide carbonate | 1319-46-6 |
| Pigment white 3 | Lead sulfate | 7446-14-2 |
| Pigment white 4 | Zinc oxide | 1314-13-2 |
| Pigment white 5 | Lithopone | 1345-05-7 |
| Pigment white 6 | Titanium dioxide | 13463-67-7 |
| Pigment white 7 | Zinc sulfide | 1314-98-3 |
| Pigment white 10 | Barium carbonate | 513-77-9 |
| Pigment white 11 | Antimony trioxide | 1309-64-4 |
| Pigment white 12 | Zirconium oxide | 1314-23-4 |
| Pigment white 14 | Bismuth oxychloride | 7787-59-9 |
| Pigment white 17 | Bismuth subnitrate | 1304-85-4 |
| Pigment white 18 | Calcium carbonate | 471-34-1 |
| Pigment white 19 | Kaolin | 1332-58-7 |
| Pigment white 21 | Barium sulfate | 7727-43-7 |
| Pigment white 24 | Aluminum hydroxide | 21645-51-2 |
| Pigment white 25 | Calcium sulfate | 7778-18-9 |
| Pigment white 27 | Silicon dioxide | 7631-86-9 |
| Pigment white 28 | Calcium metasilicate | 10101-39-0 |
| Pigment white 32 | Zinc phosphate cement | 7779-90-0 |

Titanium oxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention, but preferably titanium dioxide of the rutile type is used.

The white pigments may be employed singly or in combination. At least two different crystalline forms may be used in combination. The combined use of the anatase type and the rutile type which exhibits a high colouring power can reduce the total amount of titanium oxide, leading to improved storage stability and ejection performance of ink.

For surface treatment of the titanium oxide, an aqueous treatment or a gas phase treatment is applied, and an alumina-silica treating agent is usually employed. Untreated-, alumina treated- or alumina-silica treated-titanium oxide are employable. Alone or in addition to the previous surface treatments, an organic surface treatment may be used. The surface treatment improves the dispersion stability of the white inkjet ink.

In a preferred embodiment, the white pigment is present in the UV curable white inkjet ink in an amount of at least 13.0 wt%, preferably 14.0 to 27.0 wt%, more preferably 15.0 to 25.0 wt% and most preferably 17.0 to 22.0 wt% based on the total weight of the UV curable inkjet ink.

The numeric average particle diameter of the titanium oxide or other white pigments is preferably from 180 to 400 nm, more preferably from 200 to 300 nm, and most preferably from 220 or 280 nm. Sufficient hiding power cannot be obtained when the average diameter is less than 180 nm, and the storage ability and the jet-out suitability of the ink tend to be degraded when the average diameter exceeds 400 nm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern^{™} nano-S available from Goffin-Meyvis. A sample can, for example, be prepared by addition of one drop of ink to a cuvet containing 1.5 mL ethyl acetate and mixed until a homogenous sample was obtained. The measured particle size is the average value of 3 consecutive measurements consisting of 6 runs of 20 seconds.

### Dispersants

The UV curable inkjet ink may also contain a dispersant in order to further improve pigment dispersion properties. Examples of the dispersant include, but are not particularly limited to, polymeric dispersants commonly used for preparing a pigment dispersion liquid.

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:
- DISPERBYK^{™} dispersants available from BYK CHEMIE GMBH;
- SOLSPERSE^{™} dispersants available from LUBRIZOL;
- TEGO^{™} DISPERS^{™} dispersants from EVONIK;
- EDAPLAN^{™} dispersants from MÜNZING CHEMIE;
- ETHACRYL^{™} dispersants from LYONDELL;
- GANEX^{™} dispersants from ISP;
- DISPEX^{™} and EFKA^{™} dispersants from BASF;
- DISPONER^{™} dispersants from DEUCHEM.

Particularly preferred polymeric dispersants include Solsperse^{™} dispersants from LUBRIZOL, Efka^{™} dispersants from BASF, Disperbyk^{™} dispersants from BYK CHEMIE GMBH, and Ajisper^{™} dispersants from AJINOMOTO FINE-TECHNO Co. Particularly preferred dispersants are Solsperse^{™} 32000, 35000 and 39000 dispersants from LUBRIZOL and Disperbyk^{™} 162 from BYK CHEMIE GMBH.

The dispersants may be used alone or in combination of two or more kinds thereof.

The polymeric dispersant is preferably used in an amount of 2 to 600 wt%, more preferably 5 to 200 wt%, most preferably 50 to 90 wt% based on the weight of the pigment.

### Dispersion Synergists

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant/wt% dispersion synergist is selected between 2:1 to 100:1, preferably between 2:1 and 20:1.

Suitable dispersion synergists that are commercially available include Solsperse^{™} 5000 and Solsperse^{™} 22000 from LUBRIZOL.

Particular preferred pigments for the magenta ink used are a diketopyrrolopyrrole pigment or a quinacridone pigment. Suitable dispersion synergists include those disclosed in EP 1790698 A (AGFA GRAPHICS), EP 1790696 A (AGFA GRAPHICS) , WO 2007/060255 (AGFA GRAPHICS) and EP 1790695 A (AGFA GRAPHICS) .

In dispersing C.I. Pigment Blue 15:3, the use of a sulfonated Cu-phthalocyanine dispersion synergist, e.g. Solsperse^{™} 5000 from LUBRIZOL is preferred. Suitable dispersion synergists for yellow inkjet inks include those disclosed in EP 1790697 A (AGFA GRAPHICS).

### Free Radical Photoinitiators

The UV curable inkjet ink contains at least a free radical photoinitiator. A photoinitiator requires less energy to activate than the polymerizable compounds for forming a polymer.

The UV curable inkjet ink more preferably contains a photoinitiating system comprising one or more photoinitiators and preferably also one or more co-initiators instead of only a single photoinitiator.

The photoinitiator in the curable inkjet ink may be a Norrish type I initiator or a Norrish type II initiator. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or a co-initiator. Both type I and type II photoinitiators can be used in the present invention, alone or in combination.

### Norrish Type I photoinitiators

Preferred Norrish Type I photoinitiators for the UV curable inkjet ink of the invention are acylphosphine oxide and α-hydroxy ketone photoinitiators.

An acylphosphine oxide photoinitiator is particularly advantageous for curability when UV curing is performed with UV LEDs having a long wavelength of more than 360 nm, especially when the acylphosphine oxide photoinitiator is further combined with a Norrish Type II photoinitiator containing a thioxanthone group.

Preferred examples of the acylphosphine oxide photoinitiators include, but are not particularly limited to, a bis(2,4,6-trimethylbenzoyl)-phenyl phosphine oxide, a 2,4,6-trimethylbenzoyl-diphenyl-phosphine oxide, and a bis-(2,6-dimethoxybenzoyl)-2,4,4-trimethylpentyl phosphine oxide.

Preferred commercially available acylphosphine oxide photoinitiators include, but are not particularly limited to, Omnirad^{™} 819 (bis(2,4,6-trimethyl benzoyl)-phenyl phosphine oxide), Omnipol^{™} TP, Omnirad^{™} TPO (2,4,6-trimethyl benzoyl-diphenyl-phosphine oxide), Omnirad^{™} TPO-L (Ethyl (2,4,6-trimethylbenzoyl) phenyl phosphinate), all available from IGM RESINS.

The content of the acylphosphine oxide photoinitiator is preferably 3 to 15 wt%, more preferably 5 to 13 wt%, and still more preferably 6 to 10 wt% based on the total weight of the UV curable inkjet ink.

Examples of the α-hydroxy ketone photoinitiators include, but are not particularly limited to, 1-hydroxycyclohexyl phenyl ketone, 2-hydroxy-2-methyl-1-phenyl propane-1-one and 1-[4-(2-hydroxyethoxy)-phenyl]2-hydroxy-2-methyl-1-propane-1-on.

Examples of commercially α-hydroxy ketone photoinitiators include, but are not particularly limited to, Omnirad^{M} 1173, Omnirad^{™} 184 and Omnirad^{™} 127 and Omnirad^{™} 4817 from IGM RESINS.

The content of the α-hydroxy ketone is preferably 1 to 10 wt%, more preferably 2 to 8 wt%, and still more preferably 3 to 6 wt% based on the total weight of the UV curable inkjet ink.

In a preferred embodiment, the one or more acyl groups of the acylphosphine oxide photoinitiator or α-hydroxy ketone photoinitiator are connected to a polymer or to a polymerizable group.

Suitable polymeric acylphosphine oxide photoinitiators are disclosed in EP 2960303 A (FUJFILM) .

An example of a suitable polymeric α-hydroxy ketone photoinitiator is available as Esacure^{™} KIP150 from IGM RESINS.

Suitable polymerizable α-hydroxy ketone photoinitiators are disclosed in US 4922004 (MERCK) , such as 4-(2-acryloyloxyethoxy)-phenyl 2-acryloyloxy-2-propyl ketone prepared in Example 3.

In a particularly preferred embodiment of the UV curable inkjet ink, the free radical photoinitiator includes at least 4 wt%, preferably 5 to 15 wt% of acylphosphine oxide initiator based on the total weight of the UV curable inkjet ink. In such an amount good curability is achieved when UV curing is performed with UV LEDs having a long wavelength of more than 360 nm.

### Norrish Type II photoinitiators

The UV curable inkjet ink preferably contains a Norrish Type II photoinitiator including a photoinitiating moiety selected from the group consisting of a thioxanthone group and a benzophenone group. A Norrish Type II photoinitiator containing a thioxanthone group is particularly preferred as it is advantageous for UV LED curing, especially for UV LEDs having an emission wavelength of 360 nm or even 370 nm.

However, a UV curable inkjet ink preferably does not contain a thioxanthone. Degradation products of thioxanthone after UV curing tend to give white colour an undesired yellowish hue.

Suitable examples of Norrish Type II photoinitiators containing a thioxanthone group include, but are not particularly limited to, thioxanthone; diethylthioxanthone, such as 2,4-diethylthioxanthone; isopropylthioxanthone, such as 2-isopropylthioxanthone and 4-isopropylthioxanthone; and chlorothioxanthone, such as 2-chlorothioxanthone.

Specific examples of commercially available Norrish Type II photoinitiators containing a thioxanthone group are Speedcure^{™} DETX (2,4-diethylthioxanthone) and Speedcure^{™} ITX (2-isopropylthioxanthone) from LAMBSON and Kayacure^{™} DETX-S (2,4-diethylthioxanthone) from Nippon Kayaku Co..

Suitable examples of Norrish Type II photoinitiators containing a benzophenone group include, but are not particularly limited to, benzophenone; methylbenzophenone; methyl-2-benzoylbenzoate, phenylbenzophenone, such as 4-phenylbenzophenone; trimethylbenzophenone; bis(alkylamino)benzophenone; and 4-(dialkylamino)benzophenone.

Specific examples of commercially available Norrish Type II photoinitiators containing a benzophenone group are Omnirad^{™} 4MBZ and Omnirad^{™} BP from IGM RESINS, Speedcure^{™} PBZ and Speedcure^{™} 5040 from LAMBSON. The latter is a mixture of benzophenone and thioxanthone.

The content of the Norrish Type II photoinitiator including a photoinitiating moiety selected from the group consisting of a thioxanthone group and a benzophenone group is preferably 0.5 to 7.5 wt%, more preferably 1 to 5 wt% based on the total weight of the UV curable inkjet ink. However, if the Norrish Type II photoinitiator is a polymerizable or a polymeric thioxanthone compound, the content may be higher, preferably up to 25 wt%, more preferably up to 15 wt% based on the total weight of the UV curable inkjet ink.

Preferred examples of polymerizable Norrish Type II photoinitiators including a photoinitiating moiety selected from the group consisting of a thioxanthone group or a benzophenone group are disclosed in EP 2161264 A (AGFA) , EP 2199273 A (AGFA) and EP 2684876 A (AGFA).

Preferred examples of polymeric Norrish Type II photoinitiators including a photoinitiating moiety selected from the group consisting of a thioxanthone group or a benzophenone group are disclosed in EP 1616920 A (AGFA) and EP 1616899 A (AGFA).

Commercial examples of polymeric thioxanthones and benzophenones include Omnipol^{™} BP, Omnipol^{™} TX, and Omnipol^{™} 2702 from IGM RESINS.

### Co-initiators

In order to increase the photosensitivity further, the UV curable inkjet ink may additionally contain co-initiators, also called polymerization synergists, for which usually amine synergists are used.

Suitable examples of amine synergists can be categorized in three groups:
1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

The UV curable inkjet ink preferably includes a tertiary amine co-initiator, preferably a polymerizable or polymeric tertiary amine co-initiator.

Preferred diffusion hindered co-initiators are the polymerizable co-initiators disclosed in EP 2053101 A (AGFA) in paragraphs [0088] and [0097].

Preferred diffusion hindered co-initiators include a polymeric co-initiator having a dendritic polymeric architecture, more preferably a hyperbranched polymeric architecture. Preferred hyperbranched polymeric co-initiators are those disclosed in US 2006014848 A (AGFA).

The UV curable inkjet ink preferably includes the (diffusion hindered) co-initiator in an amount of 0.1 to 20 wt%, more preferably in an amount of 0.5 to 15 wt%, most preferably in an amount of 1 to 10 wt% of the total weight of the inkjet ink.

### Surfactants

The UV curable inkjet ink may contain at least one surfactant. The surfactant can be anionic, cationic, non-ionic, or zwitter-ionic and is preferably added in a total quantity less than 3 wt% based on the total weight of the ink and particularly in a total less than 1.5 wt% based on the total weight of the UV curable inkjet ink to prevent foaming of the ink in its container. The content of the surfactant is preferably 0.05 to 1.5 wt%, more preferably 0.10 to 1.0 wt% based on the total weight of the UV curable inkjet ink.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK^{™} 333 and BYK^{™} UV3510 from BYK Chemie and Tegoglide^{™} 410 from EVONIK.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl^{™} 350 , a silicone diacrylate from Cytec; the polyether modified acrylated polydimethylsiloxane BYK^{™} UV3500, BYK^{™} UV3510 and BYK^{™} UV3530, the polyester modified acrylated polydimethylsiloxane BYK^{™} UV3570, all manufactured by BYK Chemie; Tego^{™} Rad 2100, Tego^{™} Rad 2200N, Tego^{™} Rad 2250N, Tego^{™} Rad 2300, Tego^{™} Rad 2500, Tego^{™} Rad 2600, Tego^{™} Rad 2700, and Tego^{™} RC711 from EVONIK. Another preferred silicone is Silwet^{™} L7500 from OSI SPECIALITIES BENELUX NV.

from EVONIK; Silaplane^{™} FM7711, Silaplane^{™} FM7721, Silaplane^{™} FM7731, Silaplane^{™} FM0711, Silaplane^{™} FM0721, Silaplane^{™} FM0725, Silaplane^{™} TM0701, Silaplane^{™} TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

### Polymerization Inhibitors

The UV curable inkjet ink may also contain a polymerization inhibitor. Due to the fact that an ink contains the polymerization inhibitor, a polymerization reaction before curing, e.g. during storage or transport, can be prevented.

Suitable polymerization inhibitors include phenol type antioxidants, hindered amine light stabilizers, phosphor type antioxidants, benzoquinone, hydroquinone and derivatives, such as hydroquinone monomethyl ether commonly used in (meth)acrylate monomers.

Examples of the phenolic polymerization inhibitor include, but are not limited to the following substances, p-methoxy phenol, cresol, t-butyl catechol, di-t-butyl-p-cresol, hydroquinone monomethylether, α-naphthol, 3,5-di-t-butyl-4-hydroxytoluene, 2,6-di-t-butyl-4-methylphenol, 2,2'-methylene-bis(4-methyl-6-t-butylphenol), 2,2'-methylene-bis(4-ethyl-6-butylphenol), and 4,4'-thio-bis(3-methyl-6-t-butylphenol) and pyrogallol.

Suitable commercial inhibitors are, for example, Sumilizer^{™} GA-80, Sumilizer^{™} GM and Sumilizer^{™} GS produced by Sumitomo Chemical Co. Ltd.; Genorad^{™} 16, Genorad^{™} 18 and Genorad^{™} 20 from Rahn AG; Irgastab^{™} UV10 and Irgastab^{™} UV22, Tinuvin^{™} 460 and CGS20 from Ciba Specialty Chemicals; Floorstab^{™} UV range (UV-1, UV-2, UV-5 and UV-8) from Kromachem Ltd, Additol^{™} S range (S100, S110, S120 and S130) from Cytec Surface Specialties.

A preferred polymerization inhibitor is Irgastab^{™} UV10 from BASF. Other examples of polymerization inhibitor include TEMPO, TEMPOL, and AI cupferron.

The polymerization inhibitors may be used alone or in combination of two or more kinds thereof.

In a preferred embodiment, the polymerization inhibitor is a mixture of different types of polymerization inhibitors. Preferred polymerization inhibitors are mixtures of an oxyl free radical-based polymerization inhibitor, a phenol-based polymerization inhibitor, and an amine-based polymerization inhibitor. Suitable examples are given in EP 2851402 A (FUJIFILM) .

The polymerization inhibitor is preferably added at 200 to 20,000 ppm relative to the total amount of the inkjet ink.

### Preparation of UV Curable Inkjet Inks

The preparation of UV curable inkjet inks is well-known to the skilled person. Preferred methods of preparation are disclosed in paragraphs [0076] to [0085] of WO 2011/069943 (AGFA).

### Inkjet Ink Printing Methods

An inkjet printing method according to a preferred embodiment of the invention includes the steps of:
a) jetting one or more UV curable inkjet inks as described above on a substrate; and
b) UV curing the UV curable inkjet ink on the substrate with UV LEDs having an emission wavelength between 360 and 400 nm.

The UV curing is preferably performed by UV LEDs having an emission wavelength larger than 360 nm, preferably larger than 370 nm.

For facilitating curing, the inkjet printer may include one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

The UV curable inkjet inks are jetted by one or more print heads ejecting small droplets in a controlled manner through nozzles onto a substrate moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head.

A preferred piezoelectric print head is a so called push mode type piezoelectric print head, which has a rather large piezo-element capable of ejecting also high viscous inkjet ink droplets. Such a print head is available from RICOH as the GEN5s print head.

A preferred piezoelectric print head is a so-called through-flow piezoelectric drop-on-demand print head. Such a print head is available from TOSHIBA TEC as the CF1ou print head. Through-flow print heads are preferred because they enhance the reliability of food safe inkjet printing.

The inkjet print head normally scans back and forth in a transversal direction across the moving ink-receiver surface. Often the inkjet print head does not print on the way back. Bi-directional printing is preferred for obtaining a high areal throughput.

Another preferred printing method is by a "single pass printing process", which can be performed by using page wide inkjet print heads or multiple staggered inkjet print heads which cover the entire width of the ink-receiver surface. In a single pass printing process the inkjet print heads usually remain stationary and the ink-receiver surface is transported under the inkjet print heads.

In a particularly preferred embodiment, the inkjet printing of the UV curable inkjet inks is performed in a multi-pass printing mode. Multi-pass printing is a technique used to reduce banding in ink-jet printing. Dots of ink, when still in liquid form, tend to run together due to surface tension. This is referred to as coalescence. To print a high quality image, it is important to print individual round dots. But to achieve full saturated colours, the dots must overlap to completely cover the substrate. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the print head. In a preferred embodiment, the number of passes used is to 2 to 6 passes, more preferably no more than 4 passes.

An advantage of using a multi-pass printing mode is that the UV curable inkjet inks are cured in consecutive passes, rather than in a single pass which would require a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for wide format substrates.

### Tarpaulins

A tarpaulin or tarp is a large flexible sheet of water-resistant material. In Australia, a tarp may be known as a hootch. Tarpaulins often have reinforced grommets at the corners and along the sides to form attachment points for rope, allowing them to be tied down or suspended. The latter is advantageously exploited for truck curtains in so-called tautliners.

Preferred tarpaulins are selected from the group consisting of woven polyethylene, canvas, polyester coated with polyurethane, vinyl tarpaulins and silnylon.

A particularly preferred tarpaulin is a vinyl tarpaulin carrying a cured layer of one or more inkjet inks in accordance with the present invention.

In a preferred embodiment, the tarpaulin has a thickness of at least 130 µm, preferably at least 180 µm, more preferably 230 µm to 600 µm. A thickness of 230 µm allows for heavy duty flexing.

### EXAMPLES

### Materials

All materials used in the following examples were readily available from standard sources such as Aldrich Chemical Co. (Belgium) and Acros (Belgium) unless otherwise specified.

**TiO2** is an alumina surface treated rutile titanium dioxide pigment available as Sachtleben^{™} RDI-S from SACHTLEBEN.

**TiO2B** is titanium dioxide pigment available as Tronox^{™} CR834 from TRONOX PIGMENTS BV.

**PY155** is a C.I. Pigment Yellow 155 pigment for which Inkjet^{™} Yellow 4GC from CLARIANT was used.

**PB15:4** is an abbreviation used for Sunfast^{™} Blue 15:4, a C.I. Pigment Blue 15:4 pigment from SUN CHEMICAL CORPORATION.

**PB7** is an abbreviation used for Special Black^{™} 550, which is a carbon black available from EVONIK.

**PR122** is the abbreviation for C.I. Pigment Red 122 for which PIGMENT RED 122 TCR12203IJ from TRUST CHEM EUROPE BV was used.

SYN is the dispersion aid according to Formula (A): 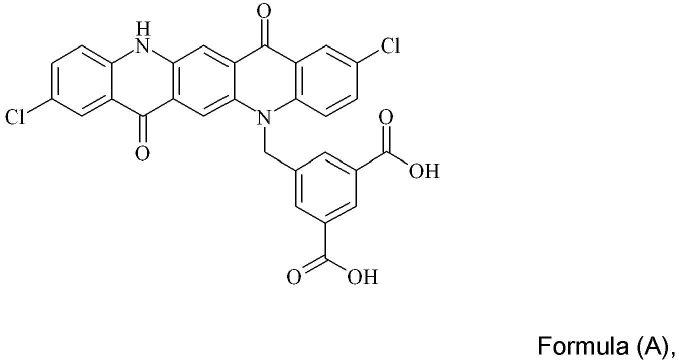 and was synthesized in the same manner as described in Example 1 of WO 2007/060254 (AGFA GRAPHICS) for the synergist QAD-3.

**DB162** is an abbreviation used for the polymeric dispersant Disperbyk^{™} 162 available from BYK CHEMIE GMBH whereof the solvent mixture of 2-methoxy-1-methylethylacetate, xylene and n-butylacetate was removed. The polymeric dispersant is a polyester-polyurethane dispersant on the basis of caprolacton and toluene diisocyanate having an amine value of 13 mg KOH/g, a Mn of about 4,425 and a Mw of about 6,270.

**PEA** is 2-phenoxyethyl acrylate available as Sartomer^{™} SR339C from ARKEMA.

**VMOX** is a Vinyl methyl oxazolidinone (CAS No.: 3395-98-0) available as VMOX^{™} from BASF.

**NVC** is N-vinyl caprolactam available from BASF BELGIUM, NV.

**TBCH** is 4-tert.butylcyclohexylacrylate available under the trade name of Sartomer CD217 from ARKEMA.

**THFA** is tetrahydrofurfuryl acrylate available as Sartomer^{™} SR285 from ARKEMA.

**IDA** is isodecyl acrylate available as Sartomer^{™} SR395 from ARKEMA.

**CLA** is a caprolactone acrylate monomer available as Sartomer^{™} SR495B from ARKEMA.

**BCOEA** is a monofunctional urethane acrylate available as Genomer^{™} 1122 from RAHN having the Formula (B):

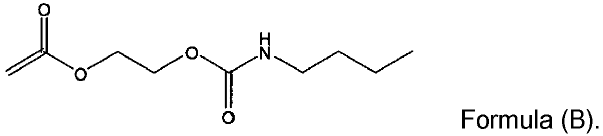

**CTFA** is cyclic trimethylolpropane formal acrylate available as Sartomer^{™} SR531 from ARKEMA.

**IPGA** is (2,2-dimethyl-1,3-dioxolan-4-yl)methyl acrylate available from BASF.

**ISOPA** is 3,3,5-trimethyl cyclohexyl acrylate available as Sartomer^{™} SR420 from ARKEMA.

**CN152** is 2-hydroxy-3-(prop-2-enoyloxy) propyl 2-methyl-2-propylhexanoate available as Sartomer^{™} CN152 from ARKEMA.

**DPGDA** is dipropylene glycol diacrylate available as Sartomer^{™} SR508 from ARKEMA.

**CN131B** is 2-hydroxy-3-phenoxypropylacrylate available as Sartomer^{™} CN131B from ARKEMA.

**CN963B80** is a urethane acrylate oligomer available as Sartomer^{™} CN963B80 from ARKEMA.

**IC819** is a bis(2,4,6-trimethylbenzoyl)-phenylphosphineoxide photoinitiator available as Omnirad^{™} 819 from IGM RESINS.

**TPO** is trimethylbenzoyl diphenyl phosphine oxide supplied as Omnirad^{™} TPO by IGM RESINS.

**TPO-L** is ethyl phenyl(2,4,6-trimethylbenzoyl)phosphinate supplied as Omnirad^{™} TPO-L by IGM RESINS.

**ITX** is Omnirad^{™} ITX is an isomeric mixture of 2- and 4-isopropyl thioxanthone from IGM RESINS.

**T410** is a silicone surfactant available as Tegoglide^{™} 410 from EVONIK.

**C7500** is a silicone surfactant available as Coatosil^{™} L7500 from MOMENTIVE PERFORMANCES.

**UV3510** is a polyethermodified polydimethylsiloxane wetting agent BYK^{™} UV3510 available from BYK CHEMIE GMBH.

**INHIB** is a mixture forming a polymerization inhibitor having a composition according to Table 2.

**Table 2**

| **Component** | **wt%** |
|---|---|
| DPGDA | 82.4 |
| p-methoxyphenol | 4.0 |
| BHT | 10.0 |
| Cupferron^{™} AL | 3.6 |

**BHT** is an abbreviation for 2,6-di-tert.butyl-4-methylphenol (CASRN128-37-0) from ALDRICH CHEMICAL CO.

**Cupferron^{™} AL** is aluminum N-nitrosophenylhydroxylamine from WAKO CHEMICALS LTD.

**UV10** is 4-hydroxy-2,2,6,6-tetramethylpiperidinooxy sebacate available as from Shanghai FINC Chemical Technology Co., Ltd..

### Measurement Methods

### 1. Average Particle Size

The average particle size of pigment particles was determined by photon correlation spectroscopy at a wavelength of 633 nm with a 4mW HeNe laser on a diluted sample of the pigmented inkjet ink. The particle size analyzer used was a Malvern^{™} nano-S available from Goffin-Meyvis.

The sample was prepared by addition of one drop of ink to a cuvet containing 1.5 mL ethyl acetate and mixed until a homogenous sample was obtained. The measured particle size is the average value of 3 consecutive measurements consisting of 6 runs of 20 seconds.

### 2. Flexing

The test method assesses the flex cracking behaviour of a printed sample when subjected to repetitive flexing according to DIN 53359.The evaluation is performed according to Table 3. A result "OK" means that the printed tarpaulin patch was able to sustain 100,000 flexes.

**Table 3**

| **Score** | **Criterion** |
|---|---|
| OK | No cracks visible by the naked eye. |
| | No or almost no cracks visible by microscope/magnifying glass |
| NOK | Cracks clearly visible by the naked eye. |
| | Sometimes even pealing-off of the ink layer. |

### 3. Adhesion

A UV curable inkjet ink was printed on a tarpaulin substrate at 100% coverage. The printed sample was fully cured using a Fusion DRSE-120 conveyer, equipped with a UV LED module Unijet^{™} i245II from USHIO, which transported the samples under the UV-lamp on a conveyer belt at a speed of 20 m/min.

The adhesion is evaluated by a cross-cut test according to ISO2409:1992(E). Paints. *International standard*. 1992-08-15. using a Braive No.1536 Cross Cut Tester from BRAIVE INSTRUMENTS with spacing of a 1 mm between cuts and using a weight of 600 g, in combination with a Tesatape^{™} 4104 PVC tape.

The evaluation was made in accordance with the evaluation values described in Table 4.

**Table 4**

| **Evaluation** | **Observation** |
|---|---|
| **A** | The edges of the cuts are completely smooth: none of the squares of the lattice is detached (=perfect adhesion). |
| **B** | Detachment of small flakes of the coating at the intersections of the cuts. A cross-cut area not greater than 5% is affected. |
| **C** | The coating has flaked along the edges and/or at the intersections of the cuts. A cross-cut area greater than 5%, but not significantly greater than 15%, is affected. |
| **D** | The coating has flaked along the edges of the cuts partly or wholly in large ribbons, and/or it has flaked partly or wholly on different parts of the squares. A cross-cut area significantly greater than 15%, but not significantly greater than 35%, is affected. |
| **E** | The coating has flaked along the edges of the cuts in large ribbons, and/or some of the squares has detached partly or wholly. A cross-cut area significantly greater than 35%, but not significantly greater than 65%, is affected. |

### 4. Viscosity

The viscosity of the UV curable inkjet inks was measured at 45°C and at a shear rate of 1,000 s⁻¹ using a Rotovisco^{™} RV1 viscometer from HAAKE.

### 5. Surface Tension

The surface tension of the inkjet inks was measured with a KRÜSS tensiometer K9 at 25°C after 60 seconds.

### EXAMPLE 1

This example illustrates the improved flexing and adhesion properties of a UV curable yellow inkjet ink in accordance with the invention.

### Preparation of Concentrated Pigment Dispersion CPY

A dispersion was made by mixing the components according to Table 5 for 30 minutes using a DISPERLUX^{™} disperser from DISPERLUX S.A.R.L., Luxembourg. The dispersion was then milled using a Bachofen DYNOMILL ECM mill filled with 0.4 mm yttrium stabilized zirconia beads (" high wear resistant zirconia grinding media" from TOSOH Co.). The mixture was circulated over the mill for 2 hours. After milling, the concentrated pigment dispersion was discharged over a 1 µm filter into a vessel. The average particle size of pigment particles in concentrated pigment dispersion CPY was found to be 165 nm.

**Table 5**

| **Component** | **wt%** |
|---|---|
| **PY155** | 25 |
| **DB162** | 8 |
| **PEA** | 66 |
| **INHIB** | 1 |

### Preparation of Yellow Inkjet Inks

The comparative inkjet inks Y-1 to Y-38 and the inventive inkjet inks Y-39 to Y-53 were prepared using the concentrated pigment dispersion CPY and mixing it with the components as shown in Table 6 to Table 10. The weight percentages (wt%) are based on the total weight of the inkjet ink.

**Table 6**

| **wt% of:** | **Y-1** | **Y-2** | **Y-3** | **Y-4** | **Y-5** | **Y-6** | **Y-7** | **Y-8** | **Y-9** | **Y-10** | **Y-11** |
|---|---|---|---|---|---|---|---|---|---|---|---|
| **PY155** | 2.55 | 2.55 | 2.55 | 2.55 | 2.55 | 2.55 | 2.55 | 2.55 | 2.55 | 2.55 | 2.55 |
| **DB162** | 0.82 | 0.82 | 0.82 | 0.82 | 0.82 | 0.82 | 0.82 | 0.82 | 0.82 | 0.82 | 0.82 |
| **CTFA** | | 20.00 | | 500 | 10.00 | 1500 | 30.00 | 5.00 | 10.00 | 1500 | 3000 |
| **THFA** | | | | | | | | 500 | 5.00 | 500 | 500 |
| **PEA** | 47.09 | 28.09 | 47.09 | 42.09 | 37.59 | 32.59 | 18.09 | 36.59 | 31.59 | 26.59 | 12.09 |
| **TBCH** | 6.64 | 6.64 | 6.64 | 6.64 | 6.64 | 6.64 | 6.64 | 6.64 | 6.64 | 6.64 | 6.64 |
| **NVC** | 9.50 | 8.50 | 9.50 | 9.50 | 900 | 900 | 8.50 | 10.00 | 10.00 | 10.00 | 9.50 |
| **BCOEA** | 1300 | 1300 | 1300 | 1300 | 1300 | 1300 | 1300 | 1300 | 1300 | 1300 | 1300 |
| **CLA** | 9.00 | 9.00 | 9.00 | 9.00 | 9.00 | 9.00 | 9.00 | 9.00 | 9.00 | 9.00 | 9.00 |
| **CN963B80** | 330 | 3.30 | 3.30 | 3.30 | 3.30 | 3.30 | 3.30 | 3.30 | 3.30 | 3.30 | 3.30 |
| **TPO** | 450 | 450 | 4.50 | 4.50 | 4.50 | 4.50 | 4.50 | 4.50 | 4.50 | 4.50 | 4.50 |
| **ITX** | 150 | 150 | 150 | 150 | 150 | 150 | 150 | 150 | 150 | 150 | 150 |
| **C7500** | 100 | 100 | 100 | 100 | 100 | 100 | 100 | 100 | 100 | 100 | 100 |
| **UV10** | 0.10 | 0.10 | 0.10 | 0.10 | 0.10 | 0.10 | 0.10 | 0.10 | 0.10 | 0.10 | 0.10 |
| **INHIB** | 100 | 100 | 100 | 100 | 100 | 100 | 100 | 100 | 100 | 100 | 100 |

**Table 7**

| **wt% of:** | **Y-12** | **Y-13** | **Y-14** | **Y-15** | **Y-16** | **Y-17** | **Y-18** | **Y-19** | **Y-20** | **Y-21** | **Y-22** |
|---|---|---|---|---|---|---|---|---|---|---|---|
| **PY155** | 2.55 | 2.55 | 2.55 | 2.55 | 2.55 | 2.55 | 2.55 | 2.55 | 2.55 | 2.55 | 2.55 |
| **DB162** | 0.82 | 0.82 | 0.82 | 0.82 | 0.82 | 0.82 | 0.82 | 0.82 | 0.82 | 0.82 | 0.82 |
| **VMOX** | | | | | | | | | 1300 | | |
| **CTFA** | 10.00 | 2000 | 3000 | | | | | | | 10.00 | 2500 |
| **THFA** | | | | 500 | 10.00 | 1500 | | 10.00 | 10.00 | | |
| **PEA** | 37.09 | 27.59 | 18.09 | 38.09 | 32.59 | 26.59 | 47.09 | 32.59 | 30.59 | 38.09 | 23.09 |
| **TBCH** | 6.64 | 6.64 | 6.64 | 10.64 | 10.64 | 10.64 | 6.64 | 10.64 | 9.64 | 6.64 | 6.64 |
| **NVC** | 9.50 | 900 | 8.50 | 9.50 | 10.00 | 1100 | 9.50 | 10.00 | | 8.50 | 8.50 |
| **BCOEA** | 1300 | 1300 | 1300 | 1300 | 1300 | 1300 | 1300 | 1300 | 1300 | 13.00 | 13.00 |
| **IDA** | 300 | 300 | 300 | | | | | | | 300 | 300 |
| **CLA** | 600 | 6.00 | 600 | 900 | 900 | 900 | 900 | 900 | 900 | 600 | 600 |
| **CN963B80** | 3.30 | 3.30 | 3.30 | 3.30 | 3.30 | 3.30 | 3.30 | 3.30 | 3.30 | 3.30 | 3.30 |
| **TPO** | 450 | 450 | 4.50 | 4.50 | 4.50 | 4.50 | 4.50 | 4.50 | 4.50 | 4.50 | 4.50 |
| **ITX** | 150 | 1.50 | 1.50 | 1.50 | 1.50 | 1.50 | 1.50 | 1.50 | 1.50 | 1.50 | 1.50 |
| **C7500** | 1.00 | 1.00 | 1.00 | 1.00 | 1.00 | 1.00 | 1.00 | 1.00 | 1.00 | 1.00 | 1.00 |
| **UV10** | 0.10 | 0.10 | 0.10 | 0.10 | 0.10 | 0.10 | 0.10 | 0.10 | 0.10 | 0.10 | 0.10 |
| **INHIB** | 100 | 100 | 100 | 100 | 100 | 100 | 100 | 100 | 100 | 100 | 100 |

**Table 8**

| **wt% of:** | **Y-23** | **Y-24** | **Y-25** | **Y-26** | **Y-27** | **Y-28** | **Y-29** | **Y-30** | **Y-31** | **Y-32** | **Y-33** |
|---|---|---|---|---|---|---|---|---|---|---|---|
| **PY155** | 2.55 | 2.55 | 2.55 | 2.55 | 2.55 | 2.55 | 2.55 | 2.55 | 2.55 | 2.55 | 2.55 |
| **DB162** | 0.82 | 0.82 | 0.82 | 0.82 | 0.82 | 0.82 | 0.82 | 0.82 | 0.82 | 0.82 | 0.82 |
| **VMOX** | | | 8.00 | 8.00 | | 8.00 | 8.00 | 8.00 | 8.00 | 8.00 | 8.00 |
| **CTFA** | 10.00 | 2000 | 19.40 | 19.40 | | 19.40 | 19.40 | 19.40 | 19.40 | 19.40 | 19.40 |
| **IPGA** | 10.00 | 500 | | | | | | | | | |
| **PEA** | 27.59 | 23.09 | 27.19 | 26.19 | 47.09 | 27.19 | 26.19 | 25.19 | 26.19 | 27.19 | 26.19 |
| **CN131B** | | | 500 | 3.50 | | 3.50 | 3.50 | 300 | 3.50 | 500 | 3.50 |
| **ISOPA** | | | | | | | | | | | |
| **TBCH** | 6.64 | 6.64 | 6.64 | 6.64 | 6.64 | 6.64 | 6.64 | 6.64 | 6.64 | 6.64 | 6.64 |
| **NVC** | 9.00 | 8.50 | | | 9.50 | | | | | | |
| **BCOEA** | 1300 | 1300 | 1300 | 1300 | 1300 | 1300 | 1300 | 1300 | 1300 | 1300 | 1300 |
| **IDA** | 300 | 300 | 6.00 | 6.00 | | 6.00 | 6.00 | 6.00 | 6.00 | 6.00 | 6.00 |
| **CLA** | 6.00 | 6.00 | | | 9.00 | | | | | | |
| **CN963B80** | 330 | 3.30 | 3.30 | 3.30 | 3.30 | 3.30 | 3.30 | 3.30 | 3.30 | 3.30 | 3.30 |
| **TPO** | 450 | 450 | 4.50 | | 4.50 | | | | | 4.50 | |
| **IC819** | | | | 3.50 | | 3.50 | 3.50 | 3.50 | 200 | | 3.50 |
| **ITX** | 150 | 1.50 | 1.50 | 1.50 | 1.50 | 0.50 | 1.50 | 1.50 | 1.50 | 150 | 1.50 |
| **TPO-L** | | | | 3.50 | | 3.50 | 3.50 | 500 | 5.00 | | 3.50 |
| **C7500** | 1.00 | 1.00 | 1.00 | 1.00 | 1.00 | 1.00 | 1.00 | 1.00 | 1.00 | 1.00 | 1.00 |
| **UV10** | 0.10 | 0.10 | 0.10 | 0.10 | 0.10 | 0.10 | 0.10 | 0.10 | 0.10 | 0.10 | 0.10 |
| **INHIB** | 1.00 | 1.00 | 1.00 | 1.00 | 1.00 | 1.00 | 1.00 | 1.00 | 1.00 | 1.00 | 1.00 |

**Table 9**

| **wt% of:** | **Y-34** | **Y-35** | **Y-36** | **Y-37** | **Y-38** | **Y-39** | **Y-40** | **Y-41** | **Y-42** | **Y-43** | **Y-44** |
|---|---|---|---|---|---|---|---|---|---|---|---|
| **PY155** | 2.55 | 2.55 | 2.55 | 2.55 | 2.55 | 2.55 | 2.55 | 2.55 | 2.55 | 2.55 | 2.55 |
| **DB162** | 0.82 | 0.82 | 0.82 | 0.82 | 0.82 | 0.82 | 0.82 | 0.82 | 0.82 | 0.82 | 0.82 |
| **VMOX** | 7.50 | 7.50 | 7.50 | 7.50 | 7.00 | 1200 | 8.00 | 8.00 | 8.00 | 8.00 | 8.00 |
| **CTFA** | 19.40 | 16.00 | 16.00 | 19.40 | 16.00 | 16.00 | 16.00 | 16.00 | 16.00 | 16.00 | 16.00 |
| **IPGA** | | | 1500 | | | | | | | | |
| **PEA** | 25.74 | 25.74 | 14.14 | 25.74 | 23.64 | 8.41 | 13.64 | 15.64 | 16.34 | 10.78 | 10.78 |
| **CN131B** | 6.00 | 6.00 | 6.00 | 6.00 | 6.00 | | | | | | |
| **ISOPA** | | 3.40 | | | 6.00 | 13.70 | 6.00 | 6.00 | 6.00 | 1300 | 13.70 |
| **TBCH** | 6.64 | 6.64 | 6.64 | 6.64 | 6.64 | 10.50 | 9.14 | 9.14 | 9.14 | 1050 | 10.50 |
| **BCOEA** | 1300 | 1300 | 1300 | 1300 | 1300 | 5.87 | 1300 | 1100 | 1100 | 7.50 | 7.50 |
| **IDA** | 6.00 | 6.00 | 6.00 | 6.00 | 6.00 | 6.00 | 6.00 | 6.00 | 6.00 | 6.00 | 6.00 |
| **CN152** | | | | | | 12.50 | 12.50 | 12.50 | 12.50 | 12.50 | 12.50 |
| **CN963B8 0** | 200 | 2.00 | 200 | 200 | 200 | 200 | 200 | 200 | 200 | 200 | 200 |
| **IC819** | 3.50 | 3.50 | 3.50 | 3.50 | 3.50 | 3.50 | 3.50 | 3.50 | 3.50 | 3.50 | 3.50 |
| **ITX** | 1.00 | 1.00 | 1.00 | 1.00 | 1.00 | 1.00 | 1.00 | 1.00 | 1.00 | 1.00 | 1.00 |
| **TPO-L** | 3.50 | 3.50 | 3.50 | 3.50 | 3.50 | 3.50 | 3.50 | 3.50 | 3.50 | 3.50 | 3.50 |
| **C7500** | 1.00 | 1.00 | 1.00 | 1.00 | 1.00 | | 1.00 | 1.00 | | 1.00 | |
| **T410** | | | | | | 0.30 | | | 0.30 | | 0.30 |
| **UV10** | 0.35 | 0.35 | 0.35 | 0.35 | 0.35 | 0.35 | 0.35 | 0.35 | 0.35 | 0.35 | 0.35 |
| **INHIB** | 1.00 | 1.00 | 1.00 | 1.00 | 1.00 | 1.00 | 1.00 | 1.00 | 1.00 | 1.00 | 1.00 |

**Table 10**

| **wt% of:** | **Y-45** | **Y-46** | **Y-47** | **Y-48** | **Y-49** | **Y-50** | **Y-51** | **Y-52** | **Y-53** |
|---|---|---|---|---|---|---|---|---|---|
| **PY155** | 2.55 | 2.55 | 2.55 | 2.55 | 2.55 | 2.55 | 2.55 | 2.55 | 2.55 |
| **DB162** | 0.82 | 0.82 | 0.82 | 0.82 | 0.82 | 0.82 | 0.82 | 0.82 | 0.82 |
| **VMOX** | 8.00 | 8.00 | 8.00 | 7.00 | 17.00 | 1500 | 1500 | 1500 | 1500 |
| **CTFA** | 16.00 | 16.00 | 16.00 | 16.00 | | | | | |
| **IPGA** | | | | 500 | | | | | |
| **THFA** | | | | | 3000 | 2000 | 19.40 | 19.40 | 2000 |
| **PEA** | 10.78 | 10.28 | 8.41 | 13.64 | 6.73 | 14.59 | 12.69 | 11.69 | 14.84 |
| **CN131B** | | | | | 10.00 | 500 | 7.50 | 6.00 | 500 |
| **ISOPA** | 13.40 | 13.40 | 18.87 | 6.00 | | | | | |
| **TBCH** | 10.50 | 9.50 | 10.50 | 9.64 | 7.00 | 8.64 | 8.64 | 8.64 | 8.64 |
| **NVC** | | | | | | | | | |
| **BCOEA** | 7.50 | 9.00 | 5.70 | 1300 | 5.50 | 1300 | 1300 | 1300 | 1300 |
| **IDA** | 6.00 | 6.00 | 3.50 | 400 | | | | | |
| **CLA** | | | | | 9.00 | 9.00 | 9.00 | 9.00 | 9.00 |
| **CN152** | 12.50 | 12.50 | 13.50 | 10.00 | | | | | |
| **CN963B80** | 200 | 200 | 2.50 | 200 | 3.30 | 3.30 | 3.30 | 3.30 | 3.30 |
| **TPO** | | | | | 450 | 450 | 4.50 | | 4.50 |
| **IC819** | 3.50 | 3.50 | 3.50 | 3.50 | | | | 3.50 | |
| **ITX** | 1.00 | 1.00 | 1.00 | 1.00 | 1.50 | 1.50 | 1.50 | 1.50 | 1.50 |
| **TPO-L** | 3.50 | 3.50 | 3.50 | 3.50 | | | | 3.50 | |
| **C7500** | | | | 1.00 | 1.00 | 1.00 | 1.00 | 1.00 | |
| **T410** | 0.60 | 0.60 | 0.30 | | | | | | |
| **UV3510** | | | | | | | | | 0.75 |
| **UV10** | 0.35 | 0.35 | 0.35 | 0.35 | 0.10 | 0.10 | 0.10 | 0.10 | 0.10 |
| **INHIB** | 1.00 | 1.00 | 1.00 | 1.00 | 1.00 | 1.00 | 1.00 | 1.00 | 1.00 |

### Evaluation and Results

The viscosity of each yellow inkjet ink was determined at 45°C and found to be in the range of 4 to 10 mPa.s.

Each yellow inkjet ink was printed on a blue tarpaulin Type CLASSIC - B6000 from SIOEN INDUSTRIES with an Anapurna^{™} H2050i LED inkjet printer equipped with a UV LED curing system in wedges ranging from 10% to 100% at 720 x 1440 dpi.

The printed tarpaulin samples were tested for flexing. All yellow inkjet inks achieved a score of "OK" meaning that the printed tarpaulin patch was able to sustain 100,000 flexes.

The adhesion was determined for each yellow inkjet ink on the printed tarpaulin. The results are shown in Table 11. The abbreviations herein have the following meaning:
- "wt% Mono" is the wt% of monofunctional monomers based on the total weight of the polymerizable composition;
- wt% V is the wt% of vinyl methyl oxazolidinone (V) based on the total weight of the UV curable inkjet ink;
- wt% H is the wt% of non-aromatic heterocyclic acrylate (H) wherein the one or more heteroatoms are an oxygen atom and is based on the total weight of the UV curable inkjet ink;
- wt% A + L is the wt% of aromatic acrylate and alicyclic acrylate based on the total weight of the UV curable inkjet ink; and
- ratio R is the weight ratio R as defined here above and in the claims.

**Table 11**

| **Yellow ink** | **wt% Mono** | **wt% V** | **wt% H** | **wt% A + L** | **Ratio R** | **Adhesion** |
|---|---|---|---|---|---|---|
| **Y-1** | 95% | 0.0 | 0.0 | 53.7 | 7.1 | D |
| **Y-2** | 95% | 0.0 | 20.0 | 34.7 | 7.2 | C |
| **Y-3** | 95% | 0.0 | 0.0 | 53.7 | 7.1 | E |
| **Y-4** | 95% | 0.0 | 5.0 | 48.7 | 7.1 | E |
| **Y-5** | 95% | 0.0 | 100 | 44.2 | 7.2 | E |
| **Y-6** | 95% | 0.0 | 150 | 39.2 | 7.2 | D |
| **Y-7** | 95% | 0.0 | 300 | 24.7 | 7.2 | C |
| **Y-8** | 95% | 0.0 | 100 | 43.2 | 7.0 | D |
| **Y-9** | 95% | 0.0 | 150 | 38.2 | 7.0 | D |
| **Y-10** | 95% | 0.0 | 200 | 33.2 | 7.0 | D |
| **Y-11** | 95% | 0.0 | 35.0 | 18.7 | 7.1 | C |
| **Y-12** | 95% | 0.0 | 100 | 43.7 | 7.1 | E |
| **Y-13** | 95% | 0.0 | 200 | 34.2 | 7.2 | E |
| **Y-14** | 95% | 0.0 | 300 | 24.7 | 7.2 | E |
| **Y-15** | 95% | 0.0 | 5.0 | 48.7 | 4.1 | E |
| **Y-16** | 95% | 0.0 | 100 | 43.2 | 4.0 | D |
| **Y-17** | 95% | 0.0 | 150 | 37.2 | 3.9 | C |
| **Y-18** | 95% | 0.0 | 0.0 | 53.7 | 7.1 | E |
| **Y-19** | 95% | 0.0 | 100 | 43.2 | 4.0 | D |
| **Y-20** | 95% | 13.0 | 100 | 40.2 | 1.8 | C |
| **Y-21** | 95% | 0.0 | 100 | 44.7 | 7.2 | C |
| **Y-22** | 95% | 0.0 | 25.0 | 29.7 | 7.2 | C |
| **Y-23** | 95% | 0.0 | 200 | 34.2 | 7.2 | C |
| **Y-24** | 95% | 0.0 | 25.0 | 29.7 | 7.2 | C |
| **Y-25** | 95% | 8.0 | 19.4 | 38.8 | 3.5 | D |
| **Y-26** | 95% | 8.0 | 19.4 | 36.3 | 3.4 | C |
| **Y-27** | 95% | 0.0 | 0.0 | 53.7 | 7.1 | D |
| **Y-28** | 95% | 8.0 | 19.4 | 37.3 | 3.4 | C |
| **Y-29** | 95% | 8.0 | 19.4 | 36.3 | 3.4 | C |
| **Y-30** | 95% | 8.0 | 19.4 | 34.8 | 3.3 | C |
| **Y-31** | 95% | 8.0 | 19.4 | 36.3 | 3.4 | C |
| **Y-32** | 95% | 8.0 | 19.4 | 38.8 | 3.5 | C |
| **Y-33** | 95% | 8.0 | 19.4 | 36.3 | 3.4 | E |
| **Y-34** | 97% | 7.5 | 19.4 | 38.4 | 3.6 | C |
| **Y-35** | 97% | 7.5 | 16.0 | 41.8 | 2.7 | C |
| **Y-36** | 97% | 7.5 | 31.0 | 26.8 | 3.6 | C |
| **Y-37** | 97% | 7.5 | 19.4 | 38.4 | 3.6 | D |
| **Y-38** | 97% | 7.0 | 16.0 | 42.3 | 2.3 | D |
| **Y-39** | 97% | 12.0 | 16.0 | 32.6 | 0.7 | A |
| **Y-40** | 97% | 8.0 | 16.0 | 28.8 | 1.3 | B |
| **Y-41** | 97% | 8.0 | 16.0 | 30.8 | 1.4 | B |
| **Y-42** | 97% | 8.0 | 16.0 | 31.5 | 1.4 | B |
| **Y-43** | 97% | 8.0 | 16.0 | 34.3 | 0.9 | B |
| **Y-44** | 97% | 8.0 | 16.0 | 35.0 | 0.8 | B |
| **Y-45** | 97% | 8.0 | 16.0 | 34.7 | 0.8 | B |
| **Y-46** | 97% | 8.0 | 16.0 | 33.2 | 0.9 | B |
| **Y-47** | 96% | 8.0 | 16.0 | 37.8 | 0.7 | B |
| **Y-48** | 97% | 7.0 | 21.0 | 29.3 | 1.5 | B |
| **Y-49** | 95% | 17.0 | 300 | 23.7 | 1.9 | A |
| **Y-50** | 95% | 15.0 | 200 | 28.2 | 1.7 | A |
| **Y-51** | 95% | 15.0 | 19.4 | 28.8 | 1.7 | B |
| **Y-52** | 95% | 15.0 | 19.4 | 26.3 | 1.6 | B |
| **Y-53** | 95% | 15.0 | 200 | 28.5 | 1.7 | A |

From Table 11, it should be clear that only the inventive inkjet inks Y-39 to Y-53 achieve good or excellent adhesion on the tarpaulin.

### EXAMPLE 2

This example illustrates the improved flexing and adhesion properties of a UV curable white inkjet ink containing an inorganic pigment.

### Concentrated White Pigment Dispersion W1

A concentrated white pigment dispersion CPW was prepared having a composition according to Table 12.

**Table 12**

| **wt% of :** | **CPW** |
|---|---|
| **TiO2** | 50 |
| **DB162** | 4 |
| **INHIB** | 3 |
| **PEA** | 43 |

The concentrated white pigment dispersion CPW was prepared by mixing the ingredients of Table 12 for 30 minutes in a vessel equipped with a DISPERLUX^{™} disperser (from DISPERLUX S.A.R.L., Luxembourg). This mixture was subsequently milled in a DYNO^{™}-MILL ECM Poly from the company WAB Willy A. Bachofen (Switzerland) using 0.40 mm yttrium-stabilized zirconium oxide-beads. The bead mill was filled for 42% with the grinding beads and operated in recirculation mode with a residence time of 10 minutes and using a tip speed of 15 m/s. The milling chamber is water-cooled during the operation. The average particle size of pigment particles in concentrated pigment dispersion CPW was found to be 244 nm.

### Preparation of White Inkjet Inks

The comparative inkjet inks W-1 to W-13 and the inventive inkjet inks W-14 to W-18 were prepared using the concentrated pigment dispersion CPW and mixing it with the components as shown in Table 13 and Table 14. The weight percentages (wt%) are based on the total weight of the inkjet ink.

**Table 13**

| **wt% of :** | **W-1** | **W-2** | **W-3** | **W-4** | **W-5** | **W-6** | **W-7** | **W-8** | **W-9** |
|---|---|---|---|---|---|---|---|---|---|
| **TIO2** | 16.00 | 16.00 | 16.00 | 16.00 | 16.00 | 16.00 | 16.00 | 16.00 | 16.00 |
| **DB162** | 1.28 | 1.28 | 1.28 | 1.28 | 1.28 | 1.28 | 1.28 | 1.28 | 1.28 |
| **VMOX** | 7.00 | 4.50 | 4.00 | 7.00 | 4.50 | 4.00 | 6.00 | 6.00 | 6.00 |
| **CTFA** | 19.40 | 19.40 | 19.40 | 19.40 | 19.40 | 19.40 | 19.40 | 19.40 | 1400 |
| **IPGA** | | | | | | | | | 500 |
| **THFA** | | | | | | | | | |
| **PEA** | 17.88 | 28.02 | 15.38 | 13.76 | 28.02 | 15.38 | 13.76 | 13.76 | 13.76 |
| **CN131B** | | | | 500 | | | 500 | 500 | 500 |
| **ISOPA** | | | 10.00 | 5.00 | | 10.00 | 500 | 500 | 500 |
| **TBCH** | 10.14 | | 3.14 | 3.76 | | 3.14 | 3.76 | 3.76 | 4.16 |
| **NVC** | | | | | | | | | |
| **BCOEA** | 10.00 | 1300 | 1300 | 1300 | 1300 | 1300 | 1300 | 1300 | 1300 |
| **IDA** | 6.00 | 6.00 | 6.00 | 6.00 | 6.00 | 6.00 | 7.00 | 7.00 | 7.00 |
| **CLA** | | | | | | | | | |
| **CN152** | | | | | | | | | |
| **CN963B80** | 400 | 400 | 4.00 | 200 | 4.00 | 4.00 | 200 | 200 | 200 |
| **TPO** | | | | | | | | | |
| **IC819** | 3.50 | 300 | 300 | 300 | 300 | 300 | 300 | 300 | 300 |
| **TPO-L** | 3.50 | 3.50 | 3.50 | 3.50 | 3.50 | 3.50 | 3.50 | 3.5 | 3.5 |
| **T410** | 0.3 | 0.3 | 0.3 | 0.3 | 0.3 | 0.3 | 0.3 | 0.3 | 0.3 |
| **UV3510** | | | | | | | | | |
| **INHIB** | 1.00 | 1.00 | 1.00 | 1.00 | 1.00 | 1.00 | 1.00 | 1.00 | 1.00 |

**Table 14**

| **wt% of :** | **W-10** | **W-11** | **W-12** | **W-13** | **W-14** | **W-15** | **W-16** | **W-17** | **W-18** |
|---|---|---|---|---|---|---|---|---|---|
| **TIO2** | 16.00 | 16.00 | 16.00 | 16.00 | 16.00 | 16.00 | 16.00 | 16.00 | 16.00 |
| **DB162** | 1.28 | 1.28 | 1.28 | 1.28 | 1.28 | 1.28 | 1.28 | 1.28 | 1.28 |
| **VMOX** | 6.00 | 1100 | 1100 | | 5.50 | 6.00 | 6.00 | 1100 | 6.00 |
| **CTFA** | 19.40 | | | | 19.40 | 1400 | 13.90 | 13.90 | 13.90 |
| **IPGA** | | | | | | 500 | | | |
| **THFA** | | 19.40 | 19.40 | | | | | | |
| **PEA** | 13.76 | 13.76 | 13.76 | 38.78 | 13.76 | 13.76 | 13.76 | 13.76 | 13.76 |
| **CN131B** | 500 | 10.00 | 10.00 | | | 500 | | | |
| **ISOPA** | 500 | | | | 10.00 | 10.00 | 19.26 | 11.26 | 11.26 |
| **TBCH** | 3.76 | 3.26 | 2.76 | 10.14 | 7.14 | 3.76 | 6.00 | 6.00 | 6.00 |
| **NVC** | | | | 500 | | | | | |
| **BCOEA** | 1300 | 10.00 | 10.00 | 13.00 | 9.12 | 8.40 | 3.70 | 1.20 | 10.70 |
| **IDA** | 7.00 | | | 4.00 | 6.00 | 7.00 | 2.50 | 5.00 | 3.50 |
| **CLA** | | 3.50 | 3.50 | | | | | | |
| **CN152** | | | | | | | 7.50 | 10.50 | 7.50 |
| **CN963B80** | 200 | 400 | 4.00 | 4.00 | 4.00 | 200 | 200 | 200 | 200 |
| **TPO** | | | 7.00 | | | | | | |
| **IC819** | 300 | 300 | | 300 | 300 | 300 | 300 | 300 | 300 |
| **TPO-L** | 3.5 | 3.50 | | 3.50 | 3.50 | 3.5 | 3.5 | 3.5 | 3.5 |
| **T410** | 0.3 | 0.3 | 0.3 | 0.3 | 0.3 | 0.3 | 0.6 | 0.6 | |
| **UV3510** | | | | | | | | | 0.60 |
| **INHIB** | 1.00 | 1.00 | 1.00 | 1.00 | 1.00 | 1.00 | 1.00 | 1.00 | 1.00 |

### Evaluation and Results

The viscosity of each white inkjet ink was determined at 45°C and found to be in the range of 5 to 10 mPa.s.

Each white inkjet ink was printed on a blue tarpaulin Type CLASSIC - B6000 from SIOEN INDUSTRIES with an Anapurna^{™} H2050i LED inkjet printer equipped with a UV LED curing system in wedges ranging from 10% to 100% at 720 x 1440 dpi.

The printed tarpaulin samples were tested for flexing. All inkjet inks achieved a score of "OK" meaning that the printed tarpaulin patch was able to sustain 100,000 flexes.

The adhesion was determined for each inkjet on the printed tarpaulin. The results are shown in Table 15. The abbreviations herein have the following meaning:
- "wt% Mono" is the wt% of monofunctional monomers based on the total weight of the polymerizable composition;
- wt% V is the wt% of vinyl methyl oxazolidinone (V) based on the total weight of the UV curable inkjet ink;
- wt% H is the wt% of heterocyclic acrylate (H) being a non-aromatic cyclic acrylate wherein the one or more heteroatoms are an oxygen atom and is based on the total weight of the UV curable inkjet ink;
- wt% A + L is the wt% of aromatic acrylate and alicyclic acrylate based on the total weight of the UV curable inkjet ink; and
- ratio R is the weight ratio R as defined here above and in the claims.

**Table 15**

| **White Ink** | **wt% Mono** | **wt% V** | **wt% H** | **wt% A + L** | **Ratio R** | **Adhesion** |
|---|---|---|---|---|---|---|
| **W-1** | 93.6% | 7.0 | 19.4 | 28.0 | 2.2 | D |
| **W-2** | 93.6% | 4.5 | 19.4 | 28.0 | 10.5 | C |
| **W-3** | 93.6% | 4.0 | 19.4 | 28.5 | 2.0 | D |
| **W-4** | 96.3% | 7.0 | 19.4 | 27.5 | 2.4 | D |
| **W-5** | 93.6% | 4.5 | 19.4 | 28.0 | 10.5 | E |
| **W-6** | 93.6% | 4.0 | 19.4 | 28.5 | 2.0 | E |
| **W-7** | 96.3% | 6.0 | 19.4 | 27.5 | 2.6 | C |
| **W-8** | 96.3% | 6.0 | 19.4 | 27.5 | 2.6 | C |
| **W-9** | 96.3% | 6.0 | 19.0 | 27.9 | 2.5 | C |
| **W-10** | 96.3% | 6.0 | 19.4 | 27.5 | 2.6 | D |
| **W-11** | 93.6% | 11.0 | 0.0 | 27.0 | 1.7 | C |
| **W-12** | 93.6% | 11.0 | 0.0 | 26.5 | 1.7 | C |
| **W-13** | 93.6% | 0.0 | 0.0 | 48.9 | 3.8 | C |
| **W-14** | 93.6% | 5.5 | 19.4 | 30.9 | 1.5 | B |
| **W-15** | 96.3% | 6.0 | 19.0 | 32.5 | 1.9 | B |
| **W-16** | 96.3% | 6.0 | 13.9 | 39.0 | 0.9 | B |
| **W-17** | 96.3% | 11.0 | 13.9 | 31.0 | 10 | B |
| **W-18** | 96.3% | 6.0 | 13.9 | 31.0 | 1.2 | B |

Only the inventive inkjet inks W-14 to W-18 in Table 15 exhibit an improved adhesion.

### EXAMPLE 3

This example illustrates an inkjet ink set in accordance with the invention.

### Preparation of Concentrated Pigment Dispersions

### Cyan Pigment dispersion CPC

A concentrated cyan pigment dispersion was prepared by mixing for 30 minutes the components according to Table 16 using a DISPERLUX^{™} disperser from DISPERLUX S.A.R.L., Luxembourg. The vessel was then connected to a Bachofen DYNOMILL^{™} ECM Poly mill having an internal volume of 8.2 L filled for 42% with 0.4 mm yttrium stabilized zirconia beads. The mixture was circulated over the mill at a flow rate of about 8 L per minute to have a residence time of 38 min. After milling the dispersion was separated from the beads using a 1 µm filter.

**Table 16**

| **Component** | **Quantity (wt%)** |
|---|---|
| **PB15:4** | 25 |
| **DB162** | 10 |
| **INHIB** | 1 |
| **PEA** | 64 |

### Magenta Pigment Dispersion CPM

A dispersion was made by mixing the components according to Table 17 for 30 minutes using a DISPERLUX^{™} disperser from DISPERLUX S.A.R.L., Luxembourg. The dispersion was then milled using a Bachofen DYNOMILL ECM mill filled for 42% with 0.4 mm yttrium stabilized zirconia beads ("high wear resistant zirconia grinding media" from TOSOH Co.). The mixture was circulated over the mill to have a residence time of 55 min. After milling, the concentrated pigment dispersion was discharged over a 1 µm filter into a vessel.

**Table 17**

| **Component** | **Quantity (wt%)** |
|---|---|
| **PR122** | 20 |
| **SYN** | 1 |
| **DB162** | 10 |
| **INHIB** | 1 |
| **PEA** | 68 |

### Black Pigment Dispersion CPK

A concentrated pigment dispersion CPK was prepared by mixing for 30 minutes the components according to Table 18 using a DISPERLUX^{™} disperser from DISPERLUX S.A.R.L., Luxembourg. The vessel was then connected to a Bachofen DYNOMILL^{™} ECM Poly mill having an internal volume of 8.2 L filled for 42% with 0.4 mm yttrium stabilized zirconia beads. The mixture was circulated over the mill at a flow rate of about 8 L per minute to have a residence time of 48 min. After milling the dispersion was separated from the beads using a 1 µm filter.

**Table 18**

| **Component** | **Quantity (wt%)** |
|---|---|
| **PB7** | 13.32 |
| **PB15:4** | 4.77 |
| **PR122** | 3.33 |
| **SYN** | 0.13 |
| **DB162** | 9.13 |
| **INHIB** | 2.04 |
| **PEA** | 67.28 |

### White Pigment Dispersion CPW2

A concentrated white pigment dispersion CPW2 was prepared having a composition according to Table 19.

**Table 19**

| **wt% of :** | **CPW2** |
|---|---|
| **TiO2B** | 50 |
| **DB162** | 4 |
| **INHIB** | 3 |
| **PEA** | 43 |

The concentrated white pigment dispersion CPW2 was prepared by mixing the ingredients of Table 19 for 30 minutes in a vessel equipped with a DISPERLUX^{™} disperser (from DISPERLUX S.A.R.L., Luxembourg). This mixture was subsequently milled in a DYNO^{™}-MILL ECM Poly from the company WAB Willy A. Bachofen (Switzerland) using 0.40 mm yttrium-stabilized zirconium oxide-beads. The bead mill was filled for 42% with the grinding beads and operated in recirculation mode with a residence time of 10 minutes and using a tip speed of 15 m/s. The milling chamber is water-cooled during the operation.

### Preparation of the inkjet ink set

The concentrated pigment dispersions CPC, CPM, CPY (of EXAMPLE 1), CPK and CPW2 were used for preparing respectively the cyan, magenta, yellow, black and white inkjet inks by mixing it with the components as shown in Table 20. The weight percentages (wt%) are based on the total weight of the inkjet ink.

**Table 20**

| **wt% of component:** | **C** | **M** | **Y** | **K** | **W** |
|---|---|---|---|---|---|
| PB15:4 | 2.50 | | | 0.43 | |
| PR122 | | 3.50 | | 0.30 | |
| SYN | | 0.18 | | 0.01 | |
| PY155 | | | 2.55 | | |
| PB7 | | | | 1.20 | |
| TiO2B | | | | | 16.00 |
| DB162 | 1.00 | 1.75 | 0.82 | 0.82 | 1.28 |
| VMOX | 8.30 | 7.50 | 8.00 | 8.00 | 6.00 |
| BCOEA | 8.50 | 6.00 | 9.00 | 9.00 | 10.70 |
| CN 152 | 13.00 | 9.00 | 12.50 | 12.50 | 7.50 |
| PEA | 8.87 | 14.27 | 10.28 | 9.76 | 13.76 |
| IDA | 6.00 | 6.00 | 6.00 | 6.00 | 3.50 |
| CTFA | 16.00 | 16.00 | 16.00 | 16.00 | 13.90 |
| ISOPA | 13.40 | 13.40 | 13.40 | 13.40 | 11.26 |
| TBCH | 10.98 | 10.95 | 9.50 | 10.46 | 6.00 |
| DPGDA | | | | 0.17 | |
| CN963B80 | 2.00 | 2.00 | 2.00 | 2.00 | 2.00 |
| TPO-L | 3.50 | 3.50 | 3.50 | 3.50 | 3.50 |
| IC819 | 3.50 | 3.50 | 3.50 | 3.50 | 3.00 |
| ITX | 0.50 | 0.50 | 1.00 | 1.00 | |
| T410 | 0.60 | 0.60 | 0.60 | 0.60 | 0.60 |
| UV10 | 0.35 | 0.35 | 0.35 | 0.35 | |
| INHIB | 1.00 | 1.00 | 1.00 | 1.00 | 1.00 |
| **TOTAL** | **100.0** | **100.0** | **100.0** | **100.0** | **100.0** |
| Viscosity @45°C (mPa.s) | 7.6 | 8.1 | 7.6 | 7.1 | 8.5 |
| Surface Tension @25°C (mN/m) | 21.0 | 21.0 | 20.9 | 20.9 | 21.6 |
| Average Particle Size (nm) | 99 | 136 | 165 | 125 | 238 |

### Evaluation and Results

A multicolour photographic image and an image of wedges ranging from 10% to 100% was printed at 720 x 1440 dpi on a blue tarpaulin Type CLASSIC - B6000 from SIOEN INDUSTRIES with an Anapurna^{™} H3200i LED inkjet printer equipped with a UV LED curing system.

The printed tarpaulin samples were tested for flexing. All inkjet inks achieved a score of "OK" meaning that the printed tarpaulin.

## Claims

1. A UV curable inkjet ink for inkjet printing tarpaulins including an pigment, a free radical photoinitiator and a polymerizable composition containing more than 90.0 wt% of monofunctional polymerizable compounds based on the total weight of the polymerizable composition, wherein the monofunctional polymerizable compounds include:
- more than 5.0 wt% of a N-vinyl oxazolidinone (V);
- more than 12.0 wt% of a heterocyclic acrylate (H) which is a non-aromatic cyclic acrylate wherein the one or more heteroatoms are an oxygen atom; and
- more than 23.0 wt% of a mixture of an aromatic acrylate (A) and an alicyclic acrylate (L);
wherein the wt% of the monofunctional polymerizable compounds is based on the total weight of the UV curable inkjet ink; and
wherein a weight ratio R = (H + A) / (V+ L) is no more than 2.0.

2. The UV curable inkjet ink as claimed in claim 1, wherein the N-vinyl oxazolidinone is N-vinyl-5-methyl-2-oxazolidinone.

3. The UV curable inkjet ink as claimed in claim 1 or 2, wherein the heterocyclic acrylate includes a polymerizable compound selected from the group consisting of tetrahydrofurfuryl acrylate, caprolacton-modified tetrahydrofurfuryl acrylate, cyclic trimethylolpropane formal acrylate, (2-ethyl-2-methyl-1,3-dioxolan-4-yl)methyl acrylate, (2,2-dimethyl-1,3-dioxolan-4-yl)methyl acrylate cyclohexanespriro-2-(1,3-dioxolane-4-yl))methyl acrylate and (3-ethyloxetane-3-yl)methyl acrylate.

4. The UV curable inkjet ink as claimed in any one of claims 1 to 3, wherein the aromatic acrylate includes a polymerizable compound selected from the group consisting of benzyl acrylate, 2-phenoxyethyl acrylate, 2-hydroxy-3-phenoxypropyl acrylate, phenoxypolyethyleneglycol acrylate, ethoxylated(4) nonylphenol acrylate and ethoxylated(4) phenol acrylate.

5. The UV curable inkjet ink as claimed in any one of claims 1 to 4, wherein the alicyclic acrylate includes a polymerizable compound selected from the group consisting of 3,3,5-trimethylcyclohexyl acrylate, isobornyl acrylate, 4-tert.butylcyclohexylacrylate, dicyclopentenylacrylate; and dicyclopentenyl-oxyethylacrylate, cyclohexyl acrylate, 1,4-cyclohexanedimethanolmonoacrylate and 2-propenoic acid, (octahydro-4,7-methano-1H-inden-1-yl)methyl ester.

6. The UV curable inkjet ink as claimed in any one of claims 1 to 5, wherein the polymerizable composition contains at least 92.0 wt% of monofunctional polymerizable compounds.

7. The UV curable inkjet ink as claimed in any one of claims 1 to 6, wherein the free radical photoinitiator includes at least 4 wt% of acylphosphine oxide initiator based on the total weight of the UV curable inkjet ink.

8. The UV curable inkjet ink as claimed in any one of claims 1 to 7, wherein the pigment is an organic colour pigment or a carbon black pigment.

9. The UV curable inkjet ink as claimed in claim 8, wherein the organic colour pigment is selected from the group consisting of C.I. Pigment Yellow 83, C.I. Pigment Yellow 97, C.I. Pigment Yellow 110, C.I. Pigment Yellow 120, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214, a beta-copper phthalocyanine pigment, a quinacridone pigment, a diketopyrrolopyrrole pigment and mixed crystals thereof.

10. The UV curable inkjet ink as claimed in any one of claims 1 to 7, wherein the UV curable inkjet ink contains titanium dioxide.

11. The UV curable inkjet ink as claimed in any one of claims 1 to 10. wherein the UV curable inkjet ink contains more than 50.0 wt% of N-vinyl oxazolidinone (V); heterocyclic acrylate (H) being a non-aromatic cyclic acrylate wherein the one or more heteroatoms are an oxygen atom; aromatic acrylate (A) and alicyclic acrylate (L) based on the total weight of the inkjet ink.

12. A UV curable inkjet ink set containing a plurality of inkjet inks according to any one of claims 1 to 11.

13. A tarpaulin carrying a cured layer of one or more inkjet inks according to any one of claims 1 to 11.

14. An inkjet printing method comprising the steps of:
a) jetting a UV curable inkjet ink as claimed in any one of claims 1 to 11 on a substrate; and
b) UV curing the UV curable inkjet ink on the substrate with UV LEDs having an emission wavelength between 360 and 400 nm.

15. The inkjet printing method as claimed in claim 14, wherein the substrate is a tarpaulin, preferably a vinyl tarpaulin.

## Patentansprüche

1. Eine UV-härtbare Tintenstrahltinte für Tintenstrahldruck auf Planen, enthaltend ein Pigment, einen freiradikalischen Fotoinitiator und eine polymerisierbare Zusammensetzung, die mehr als 90,0 Gew.-% monofunktioneller polymerisierbarer Verbindungen, bezogen auf das Gesamtgewicht der polymerisierbaren Zusammensetzung, enthält, wobei die monofunktionellen polymerisierbaren Verbindungen Folgendes enthalten:
- mehr als 5,0 Gew.-% eines N-Vinyloxazolidinons (V),
- mehr als 12,0 Gew.-% eines heterocyclischen Acrylats (H), das ein nicht-aromatisches cyclisches Acrylat ist, in dem die eine oder mehreren Heteroatome ein Sauerstoffatom sind, und
- mehr als 23,0 Gew.-% eines Gemisches aus einem aromatischen Acrylat (A) und einem alicyclischen Acrylat (L),
wobei der Gew.-% der monofunktionellen polymerisierbaren Verbindungen bezogen auf das Gesamtgewicht der UV-härtbaren Tintenstrahltinte ausgedrückt ist, und
wobei ein Gewichtsverhältnis R = (H + A) / (V + L) bei nicht mehr als 2,0 liegt.

2. Die UV-härtbare Tintenstrahltinte nach Anspruch 1, wobei das N-Vinyloxazolidinon N-Vinyl-5-methyl-2-oxazolidinon ist.

3. Die UV-härtbare Tintenstrahltinte nach Anspruch 1 oder 2, wobei das heterocyclische Acrylat eine polymerisierbare Verbindung, die aus der Gruppe bestehend aus Tetrahydrofurfurylacrylat, mit Caprolacton modifiziertem Tetrahydrofurfurylacrylat, cyclischem Trimethylolpropanformalacrylat, (2-Ethyl-2-methyl-1,3-dioxolan-4-yl)-methylacrylat, (2,2-Dimethyl-1,3-dioxolan-4-yl)-methylacrylat, Cyclohexanspiro-2-(1,3-dioxolan-4-yl))-methylacrylat und (3-Ethyloxethan-3-yl)-methylacrylat gewählt wird, enthält.

4. Die UV-härtbare Tintenstrahltinte nach einem der Ansprüche 1 bis 3, wobei das aromatische Acrylat eine polymerisierbare Verbindung, die aus der Gruppe bestehend aus Benzylacrylat, 2-Phenoxyethylacrylat, 2-Hydroxy-3-phenoxypropylacrylat, Phenoxypolyethylenglycolacrylat, ethoxyliertem (4) Nonylphenolacrylat und ethoxyliertem (4) Phenolacrylat gewählt wird, enthält.

5. Die UV-härtbare Tintenstrahltinte nach einem der Ansprüche 1 bis 4, wobei das alicyclische Acrylat eine polymerisierbare Verbindung, die aus der Gruppe bestehend aus 3,3,5-Trimethylcyclohexylacrylat, Isobornylacrylat, 4-t.Butylcyclohexylacrylat, Dicyclopentenylacrylat und Dicyclopentenyloxyethylacrylat, Cyclohexylacrylat, 1,4-Cyclohexandimethanolmonoacrylat und Pro-2-propensäure-(octahydro-4,7-methano-1H-inden-1-yl)-methylester gewählt wird, enthält.

6. Die UV-härtbare Tintenstrahltinte nach einem der Ansprüche 1 bis 5, wobei die polymerisierbare Zusammensetzung mindestens 92,0 Gew.-% monofunktioneller polymerisierbarer Verbindungen enthält.

7. Die UV-härtbare Tintenstrahltinte nach einem der Ansprüche 1 bis 6, wobei der freiradikalische Fotoinitiator mindestens 4 Gew.-% Acylphosphinoxidinitiator, bezogen auf das Gesamtgewicht der UV-härtbaren Tintenstrahltinte, enthält.

8. Die UV-härtbare Tintenstrahltinte nach einem der Ansprüche 1 bis 7, wobei das Pigment ein organisches Farbpigment oder ein Rußpigment ist.

9. Die UV-härtbare Tintenstrahltinte nach Anspruch 8, wobei das organische Farbpigment aus der Gruppe bestehend aus C.I. Pigment Yellow 83, C.I. Pigment Yellow 97, C.I. Pigment Yellow 110, C.I. Pigment Yellow 120, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214, einem β-Phthalocyaninkupferpigment, einem Chinacridonpigment, einem Diketopyrrolopyrrolpigment und Mischkristallen derselben gewählt wird.

10. Die UV-härtbare Tintenstrahltinte nach einem der Ansprüche 1 bis 7, wobei die UV-härtbare Tintenstrahltinte Titandioxid enthält.

11. Die UV-härtbare Tintenstrahltinte nach einem der Ansprüche 1 bis 10. wobei die UV-härtbare Tintenstrahltinte mehr als 50,0 Gew.-% N-Vinyloxazolidinon (V), heterocyclisches Acrylat (H), das ein nicht-aromatisches cyclisches Acrylat ist, wobei die eine oder mehreren Heteroatome ein Sauerstoffatom sind, aromatisches Acrylat (A) und alicyclisches Acrylat (L), bezogen auf das Gesamtgewicht der Tintenstrahltinte, enthält.

12. Ein Satz UV-härtbarer Tintenstrahltinten, der ein Vielzahl von Tintenstrahltinten nach einem der Ansprüche 1 bis 11 enthält.

13. Eine Plane, die eine gehärtete Schicht einer oder mehrerer Tintenstrahltinten nach einem der Ansprüche 1 bis 11 trägt.

14. Ein Tintenstrahldruckverfahren, das die folgenden Schritte umfasst:
a) Aufsprühen einer UV-härtbaren Tintenstrahltinte nach einem der Ansprüche 1 bis 11 auf ein Substrat, und
b) UV-Härtung der UV-härtbaren Tintenstrahltinte auf dem Substrat mittels UV-LED-Dioden mit einer Emissionswellenlänge zwischen 360 und 400 nm.

15. Das Tintenstrahldruckverfahren nach Anspruch 14, wobei das Substrat eine Plane ist, bevorzugt eine Vinylplane.

## Revendications

1. Encre pour jet d'encre durcissable par rayonnement UV pour l'impression à jet d'encre sur des bâches, contenant un pigment, un photoinitiateur par radicaux libres et une composition polymérisable contenant plus de 90,0% en poids de composés polymérisables monofonctionnels par rapport au poids total de la composition polymérisable, **caractérisée en ce que** les composés polymérisables monofonctionnels contiennent:
- plus de 5,0% en poids d'une oxazolidinone de N-vinyle (V),
- plus de 12,0% en poids d'un acrylate hétérocyclique (H) qui est un acrylate cyclique non aromatique dans lequel les un ou plusieurs hétéroatomes sont un atome d'oxygène, et
- plus de 23,0% en poids d'un mélange d'un acrylate aromatique (A) et d'un acrylate alicyclique (L),
**caractérisée en ce que** le % en poids des composés polymérisables monofonctionnels est exprimé par rapport au poids total de l'encre pour jet d'encre durcissable par rayonnement UV, et **caractérisée en ce qu'**un rapport pondéral R = (H + A) / (V + L) ne dépasse pas 2,0.

2. Encre pour jet d'encre durcissable par rayonnement UV selon la revendication 1, **caractérisée en ce que** l'oxazolidinone de N-vinyle est la N-vinyl-5-méthyl-2-oxazolidinone.

3. Encre pour jet d'encre durcissable par rayonnement UV selon la revendication 1 ou 2, **caractérisée en ce que** l'acrylate hétérocyclique contient un composé polymérisable choisi parmi le groupe composé d'acrylate de tétrahydrofurfuryle, d'acrylate de tétrahydrofurfuryle modifié par de la caprolactone, de formal acrylate de triméthylolpropane cyclique, d'acrylate de (2-éthyl-2-méthyl-1,3-dioxolan-4-yl)-méthyle, d'acrylate de (2,2-diméthyl-1,3-dioxolan-4-yl)-méthyle, d'acrylate de cyclohexanospiro-2-(1,3-dioxolan-4-yl))-méthyle et d'acrylate de (3-éthyloxéthan-3-yl) -méthyle.

4. Encre pour jet d'encre durcissable par rayonnement UV selon l'une quelconque des revendications 1 à 3, **caractérisée en ce que** l'acrylate aromatique contient un composé polymérisable choisi parmi le groupe composé d'acrylate de benzyle, d'acrylate de 2-phénoxyéthyle, d'acrylate de 2-hydroxy-3-phénoxypropyle, d'acrylate de phénoxypolyéthylèneglycol, d'acrylate de nonylphénol éthoxylé (4) et d'acrylate de phénol éthoxylé (4).

5. Encre pour jet d'encre durcissable par rayonnement UV selon l'une quelconque des revendications 1 à 4, **caractérisée en ce que** l'acrylate alicyclique contient un composé polymérisable choisi parmi le groupe composé d'acrylate de 3,3,5-triméthylcyclohexyle, d'acrylate d'isobornyle, d'acrylate de 4-t.butylcyclohexyle, d'acrylate de dicyclopentényle et d'acrylate de dicyclopentényloxyéthyle, d'acrylate de cyclohexyle, de monoacrylate de 1,4-cyclohexanodiméthanol et d'ester d'acide (octahydro-4,7-méthano-1H-indén-1-yl) -méthyl-2-propénoïque.

6. Encre pour jet d'encre durcissable par rayonnement UV selon l'une quelconque des revendications 1 à 5, **caractérisée en ce que** la composition polymérisable contient au moins 92,0% en poids de composés polymérisables monofonctionnels.

7. Encre pour jet d'encre durcissable par rayonnement UV selon l'une quelconque des revendications 1 à 6, **caractérisée en ce que** le photoinitiateur par radicaux libres contient au moins 4% en poids d'un initiateur d'oxyde d'acylphosphine par rapport au poids total de l'encre pour jet d'encre durcissable par rayonnement UV.

8. Encre pour jet d'encre durcissable par rayonnement UV selon l'une quelconque des revendications 1 à 7, **caractérisée en ce que** le pigment est un pigment de couleur organique ou un pigment de noir de carbone.

9. Encre pour jet d'encre durcissable par rayonnement UV selon la revendication 8, **caractérisée en ce que** le pigment de couleur organique est choisi parmi le groupe composé de C.I. Pigment Yellow 83, C.I. Pigment Yellow 97, C.I. Pigment Yellow 110, C.I. Pigment Yellow 120, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214, d'un pigment de β-phtalocyanine de cuivre, d'un pigment de quinacridone, d'un pigment de dicétopyrrolopyrrole et de cristaux mixtes de ceux-ci.

10. Encre pour jet d'encre durcissable par rayonnement UV selon l'une quelconque des revendications 1 à 7, **caractérisée en ce que** l'encre pour jet d'encre durcissable par rayonnement UV contient du dioxyde de titane.

11. Encre pour jet d'encre durcissable par rayonnement UV selon l'une quelconque des revendications 1 à 10. **caractérisée en ce que** l'encre pour jet d'encre durcissable par rayonnement UV contient plus de 50,0% en poids d'oxazolidinone de N-vinyle (V), d'acrylate hétérocyclique (H) qui est un acrylate cyclique non aromatique dans lequel les un ou plusieurs hétéroatomes sont un atome d'oxygène, d'acrylate aromatique (A) et d'acrylate alicyclique (L) par rapport au poids total de l'encre pour jet d'encre.

12. Ensemble d'encres pour jet d'encre durcissables par rayonnement UV contenant une multitude d'encres pour jet d'encre selon l'une quelconque des revendications 1 à 11.

13. Bâche portant une couche durcie d'une ou de plusieurs encres pour jet d'encre selon l'une quelconque des revendications 1 à 11.

14. Procédé d'impression à jet d'encre comprenant les étapes consistant à:
a) projeter une encre pour jet d'encre durcissable par rayonnement UV selon l'une quelconque des revendications 1 à 11 sur un substrat, et
b) durcir par rayonnement UV l'encre pour jet d'encre durcissable par rayonnement UV sur le substrat au moyen de diodes LED UV ayant une longueur d'onde d'émission comprise entre 360 et 400 nm.

15. Procédé d'impression à jet d'encre selon la revendication 14, **caractérisé en ce que** le substrat est une bâche, de préférence une bâche de vinyle.
